# EUROPEAN PATENT SPECIFICATION

(11) **EP 0 029 589 B1**
(45) Date of publication and mention of the grant of the patent: **04.07.1984**
(21) Application number: 80107252.1
(22) Date of filing: 20.11.1980
(51) Int. Cl.: C07F 5/06, C10M 5/12, C10M 5/14

(54) **Process for making grease compositions**
Verfahren zur Herstellung von Fettzusammensetzungen
Procédé pour la fabrication de compositions à base de matière grasse

(30) Priority: 23.11.1979 US 96933; 04.11.1980 US 201271; 04.11.1980 US 201272; 04.11.1980 US 201273
(43) Date of publication of application: 03.06.1981
(73) Proprietor: Chattem, Inc., Chattanooga Tennessee 37 409 (US)
(72) Inventor: Pratt, Charles E., Signal Mountain Tennessee 37377 (US); Colburn, Charles S., Jr., Lookout Mountain Tennessee 37350 (US)
(74) Representative: Wuesthoff, Franz, Dr.-Ing.

## Description

### BACKGROUND

Aluminium complex greases incoporate an aluminum complex soap which is an hydroxy aluminum diacylate wherein the acylates differ from one another. Conventionally these soaps are made in situ; see U.S. 3,345,291, U.S. Patent 3,054,816 and U.S. Patent 3,776,846. All these prior art techniques involve alcohol and possibly also water removal.

From GB-PS 825,878 the preparation of trimeric aluminum acylates has been known by reacting trialkoxy aluminum with water and optionally monocarboxylic acids, alcohols or phenols and continuing the reaction until 2 moles alcohol from the alkoxy groups have been removed per mole of water added. The products thus obtained serve to improve the properties of lubricating greases, to thicken or modify mineral oils, to thicken or gel solvents or volatile thinners and the like. From US-PS 2,599,953 complex polymeric aluminum soaps have been known which are used in lubricating greases and which serve to increase the melting point of the grease and enhance its resistance to emulsification in water.

From DE-AS 1,120,049 a flowable lubricant for internal combustion engines has been known, wherein the oil based lubricant contains up to 40% by weight of a monomeric to trimeric oxoaluminum acylate, and in the case the said composition has the constituution of a gel, it contains additionally an anti-gelling agent in the form of 8-oxyquinoline. In order to evaluate said prior art one has to differentiate between a lubricant with optionally gel-type constitution and a grease which has to have a certain "stiffness".

Such problems of removing alcohols and/or water are avoided by using a new class of mixed organoaluminum compounds which can be prepared by a three acid route, a two acid route, or a controlled hydrolysis route, as explained hereinbelow. This new class differs from prior art efforts to make greases on aluminium monohydroxy diacylate because this new class contains a higher amount of aromatic acid which unexpectedly helps the grease making procedure.

### BRIEF SUMMARY OF THE INVENTION

In one aspect, the present invention is directed to use of a class of very useful mixed aromatic/aliphatic organoaluminium compounds for making a grease, said organoaluminium compounds presentable either by the formula: 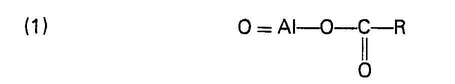 or by the formula: 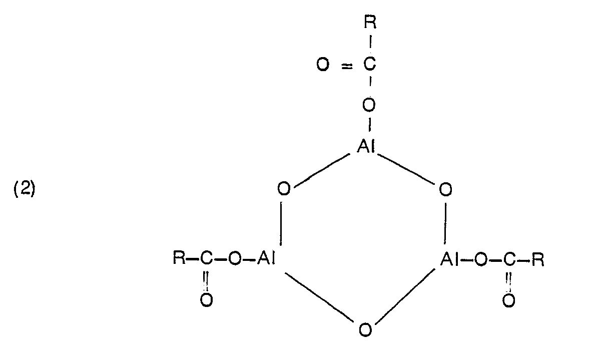 wherein R is selected from the group of radicals consisting of Type (A) radicals and Type (B) radicals where:
Type (A) radicals consist of aliphatic hydrocarbon radicals each containing from 10 to 38 carbon atoms, and
Type (B) radicals consist of aromatic hydrocarbon radicals each containing from 6 to 16 carbon atoms.

Also, in any given group of such formula (1) and/or formula (2) compounds, the ratio of the number of radicals of said Type (B) radicals to said Type (A) radicals ranges from 2:3 to 19:1.

The compounds of formulas (1) and (2) which contain up to 75 mole percent of aromatic carboxylic acid can be produced by utilizing an aromatic acid and an aliphatic acid or an aromatic acid, an aliphatic acid, and a lower alkanoic acid, the latter producing during aluminum monohydroxy diacylate manufacture an ester by-product which is easily volatilized and removed.

It is possible to make a composition comprised on a 100 mole percent basis of about 50 mole percent of mixed aluminum compound with the balance up to 100 mole percent thereof being mixed esters of carboxylic acid material. Not only does such a product composition appear to avoid certain herein indicated problems associated with mixed aluminum compounds made by the three acid route, but also and surprisingly the product compositions appear to be readily dispersible (including solubiliz- able) in organic liquids of the type conventionally used in making greases. It is therorized that the presence of mixed esters of carboxylic acid material in combination with the mixed aluminum compound for some reason not now clear promotes the dispersibility and solubilization of the mixed aluminium compound in such organic liquid (there being no intent herein to be bound by theory).

For the inventive process there are used premix compositions which compositions comprise on a 100 weight percent total weight basis:
(a) from 30 to 70 weight percent of at least one group of compounds of formulae I and II as defined above, and, correspondingly
(b) from 70 to 30 weight percent of a petroleum derived hydrocarbon liquid having a viscosity at 38°C ranging from 7,56 to 10 800 mm²/s or of any other suitable liquid which would be compatible with grease systems such as synthetic oil or ester of the type conventionally used and/or known to be compatible with synthetic lubricating oil systems.

In such a composition, the above indicated component (a) is uniformly dispersed in the above indicated component (b). As used herein, the term "dispersed", "dispersion", or the like is inclusive of both solutions and suspensions. Preferably, such a composition has the component (a) substantially completely dissolved in the component (b). It is noted that the terms "component (A)" and "component (B)" used herein are different from the terms "Type A" radicals" and "Type B radicals" and should not be confused with each other.

This invention relates to an process for making a grease. This process involves the step of converting compounds as above defined in formulae (1) and/or (2) which are dispersed (preferably dissolved) in an oil (preferably a petroleum derived hydrocarbon oil) by reaction with a carboxylic acid into a hydroxyaluminum diacyl soap directly without the production of by-product alcohol and without water being present. The following chemical equations are illustrative of this addition reaction whereby no by-products are formed:
Equation I where the compounds are represented by Formula (I) 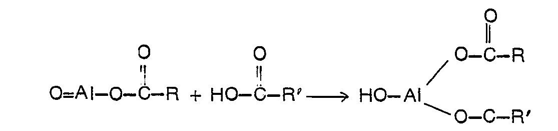
Equation 11 where the compounds of this invention are represented by Formula (2)

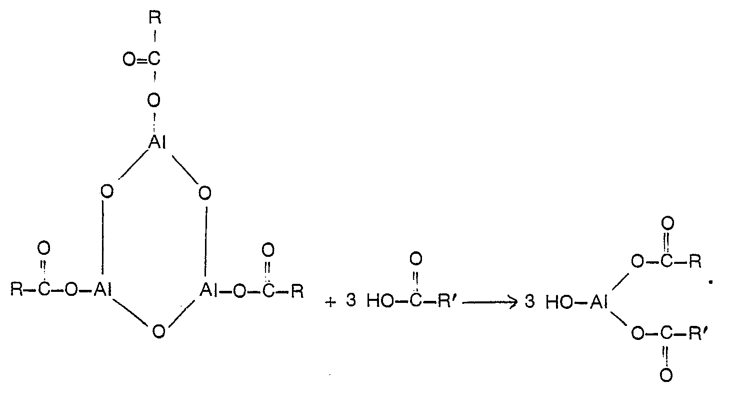

In such equations I and II, and below, R is as above defined, and R' is a radical supplied from among the usual carboxylic acids added by grease manufacturers practicing this process. For example, R' can preferably be the same as R except that the ratio, in any given instance of Type (B) radicals to said Type (A) radicals can range from 0 to 5:1. For example, by one presently preferred procedure of this invention, this process involves the steps of heating a mixture of a group of said compounds as above defined in Formulas (1⁻) and (2) with a petroleum derived hydrocarbon having a viscosity at 38°C ranging from 7,56-10 800 mm²/s until substantially completely dissolved in such petroleum oil. Next, to such resulting solution is added at least one carboxylic acid selected from aliphatic carboxylic acids, aromatic carboxylic acids and mixtures thereof, as more particularly hereinbelow defined. Thereafter, the temperature of the resulting system is raised and maintained at some elevated temperature until at least some of the said compounds present in the system are converted to aluminum monohydroxy diacylate through reaction with the acids added thereto. In another modification of this invention, the carboxylic acids can be added to the lubricating oil base first and then the said compounds added to the resulting system.

It is also possible to convert an aluminium alkoxide to a mixed aluminum compound in combination with mixed esters of carboxylic acid after which such system is subject to reaction with carboxylic acids in a grease making liquid to produce a product grease.

In making such an improved grease, the carboxylic acids can be added to the starting oil base first and then compound(s) (1) or (2) added to this resulting system, or otherwise, if desired.

Further this invention relates to improved continuous process for making the above mentioned aluminum complex greases.

A principal feature of the present invention is the creation of smooth, clear greases in a simple and reliable manner. No special pains are needed to predissolve the benzoic acid (e.g. aromatic acid) used with the organoaluminum compounds as above defined in formulas (1) and (2) and no special sequential addition and treating is needed. Both the aromatic acid (e.g. benzoic acid) and the aliphatic acid (e.g. fatty external acids) can be added simultaneously as a solid powder mixture, if desired, a smooth, clear grease is characteristically obtained.

Another principal feature of the present invention is that such mixed aromatic organoaluminum compounds (as defined hereinabove) permit one to prepare a grease having excellent and controllable high viscosity characteristics compared to the prior art (see, for example, Rinse U.S.P. No. 3,054,816).

Another feature of the present invention is that such organoaluminum compounds (as defined hereinabove) permit one to prepare a grease without the use of added water and without the production of any by-product alcohol whatsoever. The freedom from by-product alcohol formation is highly desirable both from an environmental standpoint and also from a process operation standpoint.

The grease products of this invention characteristically incorporate an aluminum complex soap which, as those skilled in the art appreciate, has reference to a mixture of aluminum soap molecules containing at least one hydroxyl anion for each aluminum atom and substantially two carboxylic acid anions per aluminum atom. Such an alumium complex soap has two dissimilar acid anions, such as one aromatic (e.g. benzoate anion) and one saturated aliphatic (e.g. arachidate, stearate, or like fatty carboxylic acid anion). Such an aluminum complex soap is produced according to the invention. Specifically, such an aluminum complex soap is generated in situ in a mineral oil continuous phase during the practice of the grease making process of this invention through reaction with carboxylic acid, but unlike the in situ process of U.S.P. No. 3,345,291, no by-product alcohol is produced.

Characteristically, a controllable and uniform thickening of a starting petroleum composition is achieved by the practice of the process of the present invention using said mixed organoaluminum compounds.

Other further objects, aims, purposes, features, advantages, uses and the like will be apparent to those skilled in the art from the present disclosure.

### BRIEF DESCRIPTION OF DRAWINGS

Figure 1 is a simplified flow sheet illustrating one embodiment of the present invention; and
Figure 2 is a flow sheet illustrating a further embodiment of the present invention.

### DETAILED DESCRIPTION

As those skilled in the art will appreciate, organoaluminum compounds of which the mixed organoaluminum compounds as defined above in Formulas (1) and (2) are examples, are believed presently to exist either in a monomeric form or in a cyclic trimeric form. The conditions under which one form exists as opposed to the other form are at this time completely unknown.

One class of preferred compounds for use in the process of the invention are those wherein the Type (B) radicals are derived from benzoic acid. Another class of preferred compounds for use in the process of the invention are those wherein the Type (A) radicals are derived from stearic acid or isostearic acid and wherein the Type (B) radicals are derived from benzoic acid.

One class of preferred aliphatic carboxylic acids for use in the inventive process comprises acids derived from fish oil which contains at least 50 percent by weight of hydrogenated fatty acids of arachidic and behenic acids, such as "Hydrofol 2022-55", available from the Ashland Chemical Company of Columbus, Ohio, USA.

Any convenient method of making the mixed organoaluminum compounds of Formulas (1) and/or (2) may be employed including the controlled hydrolysis method where approximately one mole of total acids and approximately one mole of water are reacted with approximately one mole of an aluminum lower alkoxide. the following equations represent the reaction: 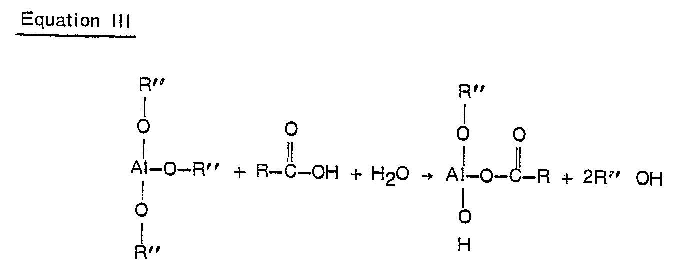 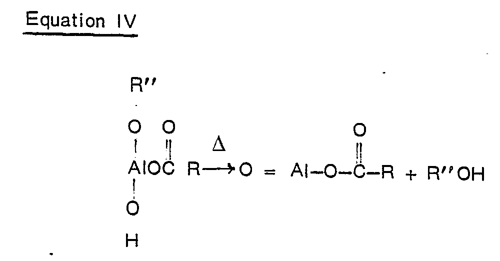 where R is as defined above and R" is a lower alkyl group. Equations III and IV show the reactions of preparing compounds represented by Formula (I). As those skilled in the art will appreciate, similar equations showing the preparation of compounds represented by Formula (2) can be developed by starting with three moles aluminum lower alkoxide, three moles of acid and three moles of water.

The desired number ratio of aliphatic radicals to aromatic radicals is achieved by controlling the composition of RCOOH in Equation III.

A basic method of preparation involves a two step procedure. Thus, in a first step, two moles of carboxylic acid are combined with one mole of an aluminum trialkoxide (e.g. from 82 to 150°C) and reacted at an elevated temperaature to form an aluminum alkoxy diacylate and two moles of an alcohol by-product (which is continuously distilled off) as illustrated by the following equation: 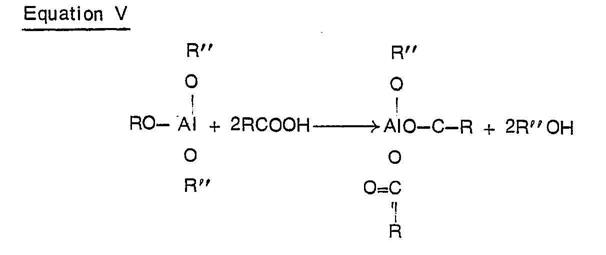 wherein R is defined above in relation to Formulas (1) and (2) and R" is as defined above. Then, in second step, the product aluminum alkoxy diacylate is thermally decomposed conventiently at atmospheric pressures using, for example, a temperature of from 150 to 250°C. The thermal decomposition results in a splitting off of an ester composed of the remaining (-OR") group and one of the acylate groups, as illustrated by the following equation wherein compounds of formula (1) are formed:

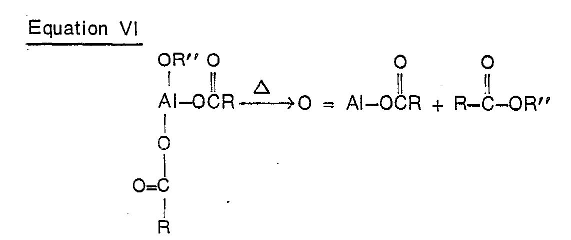

### Equation VI is illustrative of the reaction of preparing compounds of formula (1).

When making a long chain organoaluminium compound, where R is derived from stearic acid, for example, the by-product ester is a high boiling ester which is removed by vacuum distillation. In a preferred procedure, however, the intermediate aluminum monoalkoxide diacylate is a mixed diacylate, where one of the acyl groups is a low molecular weight alkanoic acid. The ester is then formed with the acyl group of the lower molecular weight acid as the by-product, and this ester can be distilled off easily at atmospheric pressures. Thus, the higher molecular weight fatty acylate group is left behind to form the organoaluminum compound. Although Rinse in U.S. Patent 2,948,743 shows using acetic acid with stearic acid, this patent does not teach or suggest the preparation of the mixed organoaluminum compounds as used according to the inventive process. Acetic acid is presently preferred lower alkanoic acid herein because of the characteristically low boiling points associated with acetate esters (isopropyl acetate, for example, boils at 88.4°C).

The term "lower" as used herein has reference to a molecule or radical, as the reference may be, containing less than five carbon atoms per molecule.

This process thus comprises the use of at least three acids, one of which is aromatic, and all three acids are add mixed together and reacted simultaneously with the aluminum tri-alkoxide. The amount of lower alkanoic (i.e. acetic) acid in such mixture is equal to one mole per mole of aluminum, and the other acids in the mixture together are equivalent to one mole mixed acids per mole of aluminum.

In compounds made by methods where a lower alkanoic acid such as acetic acid is used to produce a volatile ester by-product, it is theorized (although not herein bound by theory) that minute amounts (1% or less) of the aluminium lower alkanoate (such as aluminum acetate) could be present. However, based on present available knowledge, these small quantities of such aluminum lower alkanoate do not appear to adversely affect the properties of greases made from the aforesaid compounds.

A reaction sequence used to make an organoaluminum comopund (see Equation III and/or Equation IV) can be carried out in organic liquid phase or in some cases it can be carried out as a mass reaction ("neat"). Particularly when it is desired to use said compounds in grease making (as herein described and illustrated), it is preferred, but not necessary, to conduct the synthesis in a mineral oil or ester of the type which approximates that which it is anticipated will be used subsequently for an actual grease making operation. Then, the product as synthesized can be used directly for grease making without further preparative procedures.

However, when, for example, it is desired to make such a mixed organoaluminum compounds of Formula(1) and/or (2) in a purified or concentrated form, then the synthesis reaction(s) can be conducted in some cases without solvent or in a relatively low boiling organic inert (as respects reaction products) solvent. Afterwards (if conducted in a solvent) this solvent can be removed by vacuum distillation preferably at reduced pressures to leave a purified, concentrated product.

A preferred preparation procedure involves the reaction represented by the following equations:

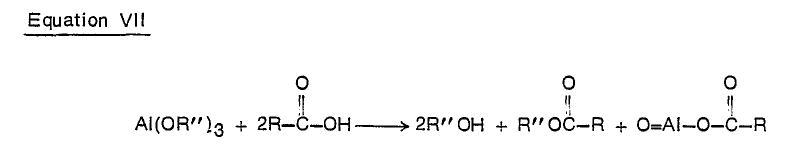

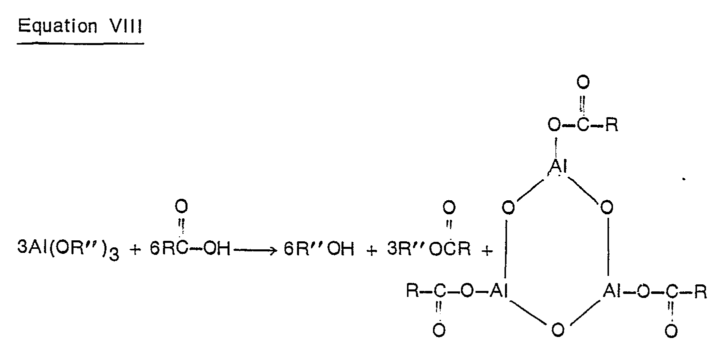

in the above equations: R is as above defined; R" is a lower alkyl radical. Equation VII shows the reaction of preparing compounds represented by Formula (1) and Equation VIII shows the reaction of preparing compounds represented by Formula (2). The desired number ratio of aliphatic radicals to aromatic radicals is achieved by controlling the composition of RCOOH in Equation VII and/or VIII.

This preferred method of preparation involves a two step procedure. Thus, in a first step, two moles of carboxlic acid are combined with one mole of an aluminum trialkoxide (e.g. from 65 to 150°C) and reacted at an elevated temperature to form an aluminum alkoxy diacylate and two moles of an alcohol by-product (which continuously distilled off) as illustrated by Equation V above.

Then, in second step, the product aluminum alkoxy diacylate is thermally decomposed conveniently at atmospheric pressures using, for example, a temperature of from 150 to 250°C. The thermal decomposition results in a splitting off of a by-product ester composed of the remaining (-OR") group and one of the acylate groups, as illustrated by the equation VI above, wherein compounds of Formula (1) are formed:
When making a mixed organoaluminum compounds a convenient method to use as a starting carboxylic acid mixture, is a mixture of the two acids which will supply the desired radicals for the said compounds. When, for example, an aluminum benzoate/stearate of the type described is desired, the acid mixture would be conveniently comprised of benzoic acid and stearic acid. In the above case, the ester formed by the reaction would be a mixture comprised of benzoate and stearate esters. These esters or a portion of them can be removed by vacuum distillation or can be left with the organoaluminum compounds as a carrier fluid.

In a premix composition presently preferred inert oganic liquids include a petroleum derived hydrocarbon, a phthalate ester, esters produced as by-products in the making of organoaluminum compounds, and mixtures thereof. By the "inert organic" in reference to "liquid" reference is had to the circumstance that such liquid is itself not reactive with said compounds under the conditions of manufacture and use described herein.

Any convenient preparation method, as described herein, may be employed to make a premix composition useful in grease making according to the invention. One presently preferred method, for example, involves, as a first step, admixing of at least one aluminum trialkoxide with a mineral oil which has a viscosity at 38°C of from 7,56 to 10 800 mm²/s has dispersed therein from 30 to 72 weight percent of a carboxylic acid mixture based upon the total combined weight of such compounds and said mineral oil.

To make a grease of this invention using a mixed organoaluminium compound of Formula (1) and/or (2), for example, one employs a mineral starting oil having a viscosity at 38°C of from 7,56 to 10 800 mm²/s. In such oil, at least one carboxylic acid is contacted with such mixed organoaluminum compounds with preferably both reactant types being dispersed (more preferably dissolved) in the oil. Such contacting carried out at a temperature sufficient to produce reaction between said carboxylic acid and said organoaluminum compound, and such contacting is continued until at least some of such organoaluminum compound has been converted into an aluminum monohydroxy diacylate. The resulting grease containing such aluminum monohydroxy diacylate is then milled and packaged. It can be milled at room temperature or at any elevated temperatures up to about 200°C. with temperatures below about 150°C being presently preferred.

In one presently preferred grease making process of the present inventon, the following steps are employed:
First, one heats mixture of petroleum derived hydrocarbon oil having a viscosity of 38°C of 7,56 to 10 800 mm²/s and a grease making composition as above described. This mixture contains a total amount of aluminum in the range from 0.01 to 2.0 weight percent based on total mixture weight. Such heating is conducted at temperatures, and for times, sufficient to substantially completely dissolve or uniformly disperse all starting mixed compounds present in said hydrocarbon oil.

Next, one admixes with the resultant such mixture of Step One a total of from 0.8 to 1.2 moles (per mole of organoaluminum compound present in said resultant such mixture) of at least one carboxylic acid selected from aliphatic monocarboxylic acids containing from 8 to 40 preferably from 15 to 40 carbon atoms each and aromatic monocarboxylic acids containing from 7 to 17 carbon atoms each.

Finally, one heats and gradually raises the temperatures of the product mixture, all the while agitating such product mixture, until at least some of such starting mixed compounds present in the first step have been converted into aluminum monohydroxy diacylate (aluminum soap) by reaction in situ with said carboxylic acid.

As indicated, in such grease making process of this invention, the starting mixed compounds of Formula (1) and/or Formula (2) present in a base oil are reacted preferably substantially completely with carboxylic acids.

A starting such mixed compounds provides from a stoichiometric standpoint approximately one-half of the acylate radicals needed to produce an aluminum soap which is formed from the reaction of such mixed compounds with carboxylic acids such aluminum soap being a compound which contain approximately two acyl groups and one hydroxyl group each group being directly bonded to an aluminum atom.

In calculating the molar quantity of carboxylic acid material to be used (added) for reaction with a mixed organoaluminum compounds in making a grease according to this invention (based on the number of carboxyl groups present in the carboxylic acids), it is sometimes convenient to use a mole ratio ranging from 0.8 to 1.2 of total quantity of carboxylic acids to total quantity of mixed organoaluminum compounds.

In a grease prepared by the teaching of this invention, such an aluminum soap is preferably characterized by having the total number of acyl radicals of any given soap molecule composed of a ratio of aliphatic acyl groups to aromatic acyl groups ranging from 1.3:0.7 to 0.7:1.3. Presently preferred aliphatic acyl groups are derived from fatty carboxylic acids each mixture containing an aliphatic group of at least 16 carbon atoms. Also, presently preferred aromatic acyl groups are derived from benzoic acid.

In a grease prepared by the teachings of this invention, it is not necessary to have all of the starting mixed organoaluminum compounds converted to such an aluminum soap.

In addition to, or in admixture with, petroleum derived (mineral) grease making base oils, suitable specialized starting oils adapted for use in the grease making process of the present invention include lubricating oils of naphthenic base, paraffinic base hydrocarbons, mixed base mineral oils, vegetable oils, synthetic oils, including synthesized hydrocarbon base fluids, alkylene polymers, polysiloxanes, ester-type oils such as dicarboxylic acid ester type oils and liquid esters of phosphorous acids, (such as are shown in U.S.P, No. 2,768,138).

To make a grease using compounds of Formula (1) and/or (2) in an oil, a grease maker need use no particular type of carboxylic acid for reaction therewith. For example, it now appears that the teachings of the prior art with respect to the use of various carboxylic acids, combinations thereof, order of contacting, temperature conditions, and the like in connection with the use of the prior art aluminum alkoxides in grease making can be employed to make greases from compounds of Formula (1) and/or (2), except that here no by-product alcohol is produced and no water is needed.

One particularly preferred monocarboxylic acid is presently isostearic because such acid, which is a branched C_{'8} saturated acid, is a relatively low viscosity liquid at ambient conditions and tends to bring down the melting point and softening point of derivatives thereof, including especially aluminum soaps thereof.

In such class, the Type (B) radicals are preferably derived from benzoic acid. Such preferred compound is relatively easy for a grease maker to convert into a grease in the presence for example, of a hydrocarbon oil. Such compounds containing a higher ratio of benzoic acids to aliphatic acids than is disclosed in the prior art presently appear to be particularly desirable in grease making because a smaller quantity of benzoic acid is subsequently needed to complete the in situ reaction which forms the aluminum monohydroxy stearate/benzoate soap. Benzoic acid itself is difficult for a grease maker to handle because of its tendency to sublime at temperatures above 100°C.

Greases made with mixed organoaluminum compounds as provided by the teaching of this invention can be formulated with the various additives heretofore employed in the grease making art, if desired.

To prepare a composition containing about 50 mole percent mixed compounds of formulas I and II with the balance up to 100 mole percent being mixed esters of the carboxylic acid, using the two acid preparation route, one heats a mixture of an aluminum alkoxide and a carboxylic acid to a first temperature which is above the melting point of the carboxylic acid, but which is below the boiling point of the alkanol as defined below while agitating the mixture. Such first heating is continued for a time sufficient to form a substantially single phase liquid or a substantially uniform slurry comprised of such mixture.

In such mixture the aluminum alkoxide is characterized by the formula: 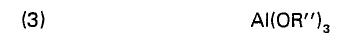 where R" is as defined above.

Also, in such mixture, the carboxylic acids are comprised of:
(a) at least one aliphatic monocarboxylic acid containing from 8 to 40 carbon atoms per molecule,
(b) at least one aromatic monocarboxylic acid containing from 7 to 17 carbon atoms per molecule, and
(c) the mole ratio of said aromatic acid to said aliphatic acid ranging from 2:3 to 19:1.

Also, the alkanol is characterized by the formula: 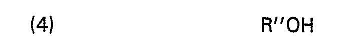 where R" is as defined above and where R"OH is derived from reaction between said aluminum alkoxide and said carboxylic acid.

In such first heating, such mixture is characterized by having a mole ratio of said aluminum alkoxide to said carboxylic acid of 1 to 2.

Preferably, before said first heating, said carboxylic acid is heated to such first temperature and the aluminum alkoxide is then admixed therewith.

After the desired single phase liquid or a substantially uniform slurry is produced by such first heating, a second heating is undertaken, preferably without any cooling. The second heatina is preferably conducted with continuous agitation of the liquid, and during the second heating the liquid is heated to second temperatures in the range where the alkanol is distilled off. The second heating is maintained or continued for a time sufficient to remove the equivalent of at least about two theoretical moles of said alkanol (per mole of such aluminum alkoxide).

Next, and preferably without cooling, the product from such second heating, a third heating is undertaken. In the third heating, the resulting product from the second heating is gradually heated to third temperatures ranging from a temperature corresponding to the final temperature of the second heating up to a temperature of about 200°C, thereby converting the resulting product from the second heating into a homogeneous liquid which has characteristically a viscosity which is substantially less than that of the product resulting from the second heating.

Preferably, the third heating is contined at about 200°C for a time of at least 0,25 hour, and more preferably such third heating is continued at about 200°C for a time of at least 0.5 hour.

In one presently preferred procedure, after such third heating, the final liquid so produced is subjected to a vacuum distillation so as to remove from such final liquid any organic material therein which at atmospheric temperature and pressure boils at a temperature not more than about 250°C. Preferably, such a vacuum distillation is conducted at a pressure not above about 931 mbar. At such a reduced pressure, it is preferred to keep the distillation temperatures below about 200°C.

During the second heating, it is theorized that the reaction which occurs is represented by Equation V above.

In the third heating step, it is presently theorized that a reaction occurs which is representable by Equation VI above.

By the present invention, there is provided a simple, reliable, economical continuous process for making an aluminium complex grease wherein a sequence of steps is practiced simultaneously but sequentially. In a first step, one mixes a first dispersion of organoaluminum compounds with a second dispersion of carboxylic acids in a first mixing zone to produce a substantially homogeneous product mixture. Preferably, such dispersions are true solutions.

In the next steps, one charges such product mixture into an elongated reaction zone, and then passes such product mixture through such reaction zone while maintaining said reaction zone at a temperature ranging from 135 to 250°C. The residency time for such product mixture in such reaction zone is at least such that the organoaluminium compound is substantially completely reacted with the carboxylic acids, thereby to form a product aluminum complex grease.

Thereafter, one removes such product grease from such reaction zone, and cools same.

After a preliminary cooling, a product grease can be milled if desired, or mixed with additional oil and additives, if desired, in one or more subsequent mixing zones.

The organoaluminum compound for use in this continuous process is as defined above in formulas (1) and (2), with references as above shown.

Similarly, the carboxylic acids utilized in this continuous process is characterized by the formula: 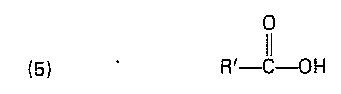 where R' is selected from aliphatic hydrocarbon radicals containing from 9 to 40 carbon atoms each and aromatic hydrocarbon radicals containing from 6 to 28 carbon atoms each, and wherein, in any given such carboxylic acids the weight percent of said aromatic radicals ranges from and including 0 to 70% with the balance up to 100 weight percent of all said radicals, being said aliphatic radicals.

The carrier liquid for each of said first and said second dispersions used in this continuous process comprises an inert organic liquid having a viscosity at 38°C of from 7,56 to 10 800 mm²/s, preferably from 10 to 5400 mm²/ such as a hydrocarbon oil.

The total amount of aluminum in such product mixture used in this continuous process ranges from 0.01 to 4.0 weight percent based on total mixture weight, and preferably from 0.01 to 2 weight percent.

The mole ratio of the total amount of aluminium to the added said carboxylic acids used in this continuous process ranges from 0.75:1.25 to 1.25:0.75 in said product mixture, and preferably ranges from 0.8:1.2 to 1.2:0.8.

One preferred class of first dispersions for use in the practice of such continuous process comprises on a 100 weight percent total weight basis:
(A) from 2 to 60 weight percent of organoaluminium compounds as defined above, and, correspondingly
(B) from 98 to 40 weight percent of a petroleum derived hydrocarbon liquid having a viscosity at 38°C ranging from 7,56 to 10,800 mm²/s.

In the invention, in place of, or in combination with, such hydrocarbon liquid, one can employ any other hydrocarbonaceous liquid which would be compatible with grease systems, such as synthetic oil or an ester of the type conventionally used or known to be compatible with synthetic lubricating oil systems. In such a first dispersion, the above indicated component (A) is uniformly dispersed in the above indicated component (B). Although, as indicated above, the term "dispersed", "dispersion", or the like as used herein, is inclusive of both solutions and suspensions, preferably, such a dispersion used in the continuous process has the components (A) substantially completely dissolved in the component (B). Conventional methods for the preparation of such dispersions can be employed.

One preferred class of second dispersions for use in the practice of the continuous process comprises on a 100 weight percent total weight basis:
(A) from 2 to 50 weight percent of carboxylic acids and, correspondingly
(B) from 50 to 98 weight percent of the above defined petroleum derived hydrocarbon liquid.

The continuous process of this invention involves the converting of compounds as defined in Formulas (1) and/or (2) which are dispersed (preferably dissolved) in an oil (preferably a petroleum derived hydrocarbon oil as described above) by reaction with a carboxylic acids as defined in Formula (3) into an aluminummonohydroxy diacyl soap directly without the production of by-product alcohol and without water being present as illustrated by the equations above presented (see, for examples, equations I and II).

Any convenient method may be used to make starting solutions or dispersions for use in the continuous process of the present invention which features the continuous production of smooth, clear greases in a simple and reliable manner.

The continuous process of this invention is advantageously and preferably practiced with a first dispersion which additionally contains an ester material having the formula: 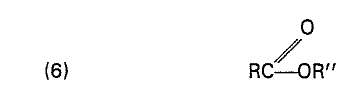 wherein
R is as defined above, and
R" is a lower alkyl radical, and wherein, in said first dispersion, the mole ratio of said ester to said organoaluminum compounds ranges from 1.5:1 to 0.

Further, the continuous process of this invention is preferably and advantageously practiced by utilizing a first dispersion which additionally contains a second organoaluminum compound which is characterized by the formula: 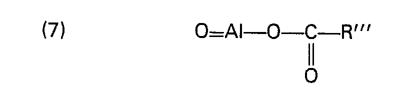 and by the formula: 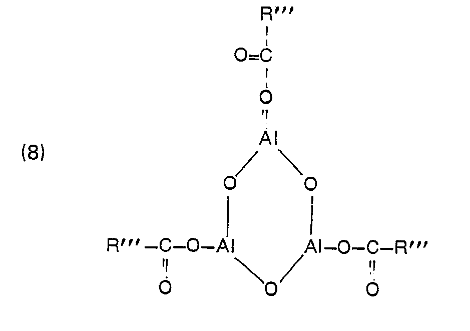 wherein R'" is as R defined above but additionally includes a further group of radicals consisting of:

Type (C): lower alkyl radicals, and wherein, in any given such compounds on a 100 mole percent total basis, the mole percent of said Type (B) radical ranges from 40 to 95, the mole percent of said Type (C) radicals ranges from 0 to 50, and the mole percent of said Type (A) radicals ranges from 5 to 50.

Preferably, a first dispersion for use in the continuous process is prepared inherently in a process for making organoaluminum compounds as described above.

Conveniently and preferably, in practicing the continuous, process each of the first dispersion and the second dispersion can be heated to temperatures which facilitate pumping, dissolution of the respective ingredients, and mixing. The respective first and second dispersion can each be pumped by a metered pump into a mixer of some desired but conventional type, such as a static mixer, a Welex-type high intensity mixer or Prodex mixer. The mixed product stream coming from such a mixing zone then passes either directly to a reaction zone or to a heat exchange zone. If a separate heat exchange zone is employed, the temperature of the product mixture is raised to a temperature compatible with the temperatures maintainable in the reaction zone. In the reaction zone, the product mixture is heated to a temperature in the range from 135 to 250°C (preferably about 200°C) in order to cause the organoaluminum compounds to react with the carboxylic acids and thereby form a grease.

Observe that the continuous process of this invention from a chemical engineering point of view is relatively simple, requiring at a minium two feed tanks, a mixing system of some kind (perhaps a static mixer for simplicity), a long pipe or equivalent about which a heat exchange medium can be passed so as to serve as a reaction zone. The length of the tubular reaction zone is determined by the rate at which the material is pumped through the reaction zone and how long the time period is for heating the product mixture to a reaction temperature. Production capacity appears to depend upon the rate at which mixtures can be pumped through the system using available heat transfer capacity.

After passing through the continuous reaction zone, the product grease is cooled, optionally milled in whole or in part, and optionally blended in whole or in part with various grease additives.

A present preference in the continuous process is to entirely cool a process grease to a lower temperature before subjecting all or a part of a product grease to a milling operation; however, if one desires to mill an entire grease, the entire product grease can be pumped through the milling zone. Conventional milling equipment may be employed. However, if one only wishes to mill a fraction of a grease product, a side stream of product grease can be diverted for the main steam, milled, and recombined with the continuously flowing main stream.

One feautre of the continuous process is that milling is not required for certain greases, it appears, since there is little opportunity for ohe continuous processing system to develop localized hot spots which, it is theorized, may well be the main cause of grease lumping. It is the phenomenon of grease lumping which has heretofore led to the desirability of milling, as those skilled in the grease making art will readily appreciate.

In addition to, or separately from, a milling zone, if desird in the continuous process one can also meter in and mix with a product grease various additives in appropriate mixing zones. The additives can be added to a product grease either before or after a milling operation, as those skilled in the art will appreciate. Mixing of a product grease with additives may be accomplised conventionally.

In the case of a tubular reactor, in order to avoid irregular heating, such a might occur in the region adjacent the reactor wall, a mixing of reactants in the reactor is sometimes desirable. For this purpose, a modified extruder or a static mixer may be employed in the reaction zone.

In one presently preferred method of operating the continuous process, after a product grease is removed from the reaction zone, the product grease may be cooled in a heat exchanger to a temperature ranging from 140 to 25°C before being milled, when milling is utilized. To avoid the use of a heat exchanger, it may be convenient to withold a large portion of oil needed for the finished grease and add it to the system after the aluminum containing product grease passes through the reaction zone.

In one presently preferred mode of practicing the continuous process, after cooling and before milling, additives may be mixed with a product grease in a continuous mixing zone interposed in the system before the milling zone.

If desired, only a portion of a product grease, so cooled as above-described and so milled as above-described, may be mixed with the remainder of the product grease under continuous operating conditions, wherein cooling and milling are accomplished using only a portion of a given product grease. After the milling, the portion is conveniently mixed with the remainder of a product grease in a third mixing zone. If desired, various additives may be mixed with the product grease in such third mixing zone.

For reasons of process simplicity, a present preference is to continuously process an entire product grease by a cooling and milling operation so as to avoid side streams. If desired, after cooling and before milling, additives may be mixed with a product grease in such a second mixing zone and further additives may be mixed with such a product grease in such a third mixing zone.

Conveniently, and preferably, in practicing the continuous process of the present invention, the total amount of carrier liquid present in the first mixing zone is derived from the first dispersion and the second dispersion. A present preference is to maintain the weight ratio of carrier liquid in said first dispersion to the weight of carrier liquid in the second dispersion within a weight ratio ranging from 80:20 to 20:80 (based upon the total weight of carrier liquid present in the first mixing zone).

Preferably in the first mixing zone, the total amount of aluminum present ranges from 0.01 to 4.0 weight percent of the total product mixture on a 100 weight percent basis.

if desired, a plurality of first make-up. tanks may be employed, and more than one first feed tank may be employed.

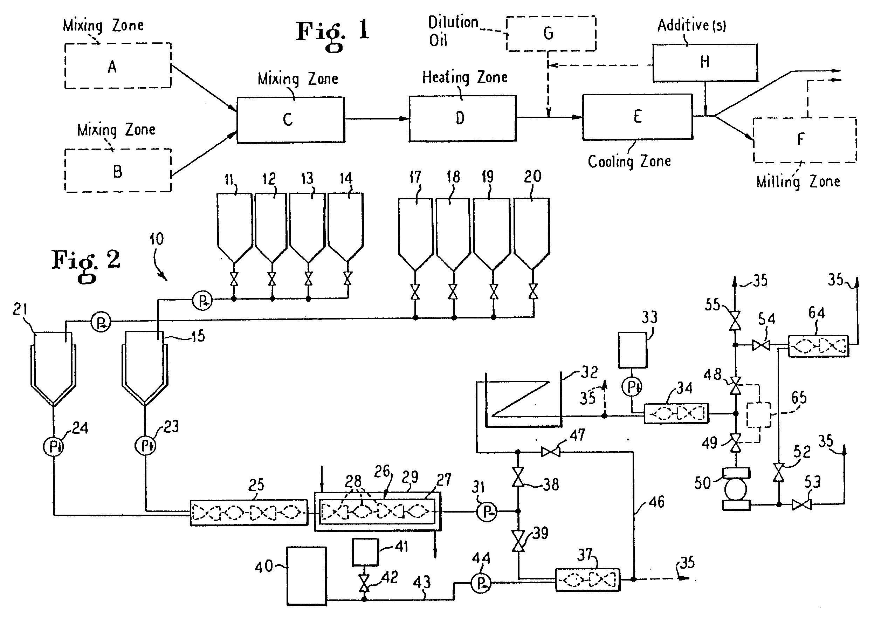

Referring to Figure 1, there is seen a simplified flow diagram of one mode of practicing the continuous process of the present invention. In first mixing zone A, one can prepare a solution of the organoaluminum compounds, while in a second mixing zone B one can prepare a solution of monocarboxylic acids as above defined. The solutions from the respective mixing zones A and B are then charged into another mixing zone C, in proportions so as to produce a product mixture as hereinabove defined. From the mixing zone C, the product mixture is moved into a heating zone D wherein the organoaluminum compounds reacts with the carboxylic acids to produce an aluminum soap as hereinabove described with the result that the material issuing from the heating zone D constitutes a grease product of the present invention.

The grease product from heating zone D, if desired, can optionally be admixed with dilution oil from a holding tank G, the dilution oil and the product grease after heating zone D, it is preferred to charge additives into the dilution oil as such is being admixed with the product grease. Addition of additives is a common practice in the manufacture of aluminum complex greases, as those skilled in the art will appreciate, and the additives typically employed in the manufacture of aluminum complex greases are here contemplated in the amounts conventionally employed.

The product grease from heating zone D moves into a cooling zone E. The cooling zone E can be in the nature of a heat exchanger, for example. Alternatively, the cooling zone E can comprise a mixing zone wherein dilution oil at ambient temperatures is admixed with the heated product grease from the heating zone D.

Following the cooling zone E, additives may be added to a product grease, the amount of cooling occurring in a cooling zone being such as to reduce the temperature of a product grease to a level above ambient where additives are conveniently mixed with a product grease, particularly when the additives involved should not be added for reasons of product stability or the like to the grease issuing from heating zone D. Typically, additives are added to a product grease issuing from cooling zone E and such additives are admixed with a product grease in a mixing zone, not detailed in Figure 1. The product from the cooling zone, typically with additives as indicated, can then be moved into a storage area, containerized, as desired, as those skilled in the art will appreciate. Alternatively, the product from cooling zone E can be moved into a milling zone so as to mill a product grease to some predetermined desired extent, all in the manner conventionally accomplished in the manufacture of aluminum complex greases. If milling is accomplished, the product from the milling zone can be moved into storage container loading, as desired. Any convenient or desired technique for processing a product grease from a cooling zone E can be utilized.

Referring to Figure 2, there is seen a simplified schematic view of one embodiment of a commercial scale operation utilizing the continuous grease making process of the present invention, such operation, for convenience, being designated in its entirety herein by the numeral 10. Operation 10 is seen to employ a plurality of first make-up tanks designated herein as 11, 12, 13 and 14, respectively, such tanks 11-14 being adapted for the preparation of starting dispersions of the organoaluminum compounds. In each make-up tank, an organoaluminum compound/base oil solution, for example, is made-up. Each solution is conveniently analyzed for percent aluminum metal and any adjustment in solution components necessary to achieve a standardized prechosen composition are made. After which, prefereably in a sequence, the contents of each make-up tank 11-14 is charged into a feed tank 15.

Similarly, a plurality of make-up tanks 17, 18, 19 and 20 are provided in which, respectively, solutions of, for example, stearic acid, benzoic acid and base oil are made-up. Each acid solution is tested as by an acid number titration to determine the acid content of that tank. After any adjustments for accuracy or the like are made, the contents of a respective tank 17-20 are charged into a feed tank 21. The respective contents of feed tanks 15 and 21 may be preheated, if desired, to some prechosen temperature in order to facilitate subsequent mixing. The contents of the respective tanks 15 and 21 are charged via metering pumps such as pumps 23 and 24 into mixing zone 25. The mixing zone 25 is here shown as a static mixer which is a particularly convenient and presently preferred unit for accomplishing mixing of materials from feed tanks 15 and 21. A product mixture from the mixing zone (static mixer) 25 is continuously moved into a reaction zone 26. Zone 26 is here comprised of an elongated tube 27, wherein static mixer vanes 28 are positioned. In addition, the tube 27 is provided with a heating mantle or jacket through which heating fluid (such as heated oil or a vaporized heat exchange material, such as the type available commercially under the trademark "DOWTHERM" from Dow Chemical Company, Midland, Michigan), is circulated. Thus, as a product mixture moves continuously through the tube 27, it is continuously mixed so as to prevent localized overheating or underheating of a given location from occurring. The jacket temperature on tube 27 and the length of tube 27 are so regulated and chosen that by the time material issues from the tube 27, a substantially complete reaction has taken place between the organoaluminum compounds and the carboxylic acids present, so that the product issuing from the tube 27 constitues a product grease of this invention.

Although not shown in Figure 2, but as chemical engineers will appreciate, it may be advisable to place a holding tank, after the reaction zone 26 in order to provide for flow variations in the continuous process stream involved.

The product from the reaction zone 26 is moved by a pump 31, if desird, into a heat exchange zone 32, so as to controllably cool the product grease to some predetermined lower temperature, after which the so-cooled product grease can be admixed with additives from hold tank 33, the additives being charged along with the so-cooled grease into a mixing zone 34, such mixing zone 34 being conveniently a static mixer, as those skilled in the art will appreciate. The product from mixing zone 35, if desired, can then be directly moved towards a storage area 35 (not detailed herein, but conventional).

Alternatively, instead of the procedure above related, a product from the reaction zone 26 can be moved into a mixing zone 37 by appropriate settings for valves 38 and 39. In mixing zones 37, a product grease can be diluted with a dilutant oil from a reservoir tank 40. To the dilutant oil 40 can be added additives, if desired, from a holding tank 41, the tank 41 being conveniently provided with a valve 42 for regulating flow of additives from tank 41 into oil from reservoir 40 in feed line 43. The flow through line 43 is conveniently regulated into the mixing zone 37 by a metering pump 44. From the mixing zone 37, the product mixed diluted grease is led through pipe 46, passed open valve 47 and into the heat exchanger 32, wherein the product mixture may be reduced to some lower prechosen temperature, which is lower than the temperature produced in the mixed diluted grease as a result of mixing with the product grease the ambient temperature dilutant oil. As those skilled in the art will appreciate, it is possible that the product from the mixing zone 37 is cool enough for immediate discharge from the mixing zone 37 to a storage area 35. If further cooling and heat exchanger 32 is desirable or necessary, the diluted product grease from exchanger 32 can be directly diverted to the storage area 35, if desired.

If desired, a product grease produced by the process of the present invention can be subjected to a milling operation of the type conventionally utilized in the aluminum complex grease making art. For example, a product grease stream leaving mixing zone 34 can be diverted using valves 48 and 49 in proper sequence into a milling zone 50, after which the discharge from the milling zone 50 is either moved directly to a stroage area 35 or (by, for example, regulating an appropriate valve network comprised, for example, of valves such as 52 and 53) into a further mixing zone 64 wherein the milled grease can be continuously recombined with product grease which is unmilled and which is derived from the product stream produced from the mixing zone 34 (assuming an appropriate configuration for valves 48 and 54, for example). In order to obtain a proper ratio of milled grease to unmilled grease, an appropriate ratio flow control 65 could be employed, in the embodiment shown, for valves 48 and 49, as those skilled in the art will appreciate. In such a blending of milled with unmilled grease, the valves 53 and 55 would be closed, and the product from the mixing zone 64 would be moved into a storage 35.

### EMBODIMENTS

The present invention is further illustrated by reference to the following Examples and comperative examples.

### Preparation of Mixed Organoaluminum compounds

A To a three neck 500 ml flask or pot is added 100 grams of a grease base oil having a viscosity at 38°C of 380 mm²/s. This is a dark, amber, heavy viscous oil mixture used for grease manufacture. To this oil in such flask is added 30 grams of acetic acid, 71 grams of hydrogenated tallow fatty acids and 30.5 grams of benzoic acid and finally 102.1 grams aluminum isopropoxide. This mixture is stirred and the temperature gradually increased to a point where isopropanol begins to distill off. As the distillation continues, temperature readings are taken at 30 minute intervals and the following Table results:

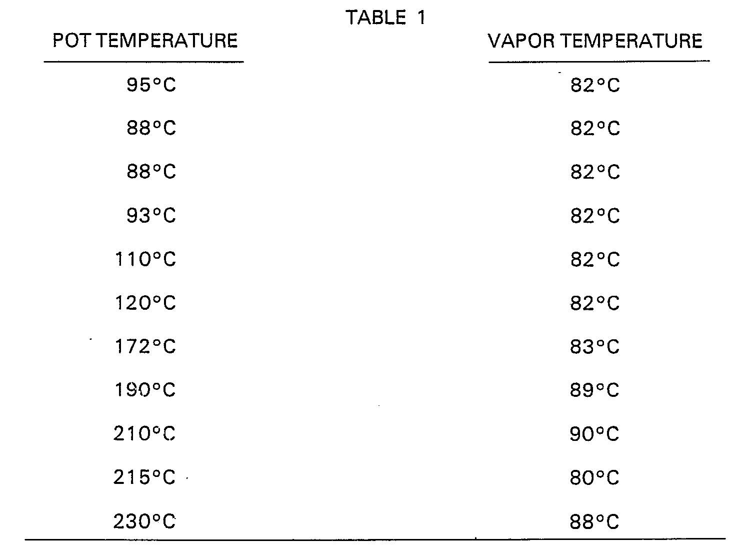

During the distillation, a total of 2 moles of isopropyl alcohol are removed after which one mole of isopropyl acetate is removed, all on the theoretical basis. The reaction mixture is thereafter allowed to cool to room temperature. The product assays at 5.72 percent aluminum, indicating a 51.9 percent solution of mixed aluminum stearate/benzoate with a stearate/benzoate mole ratio of 1.1 in grease base oil. At room temperature, this product is a soft paste having a generally clear dark amber hue. This product is pourable at a temperature of about 50-60°C.

In place of the grease base oil, one may employ any inert solvent medium having a relatively high boiling point, such as, for example, Magie Oil No. 47 (which is an all aliphatic oil made by Magia Oil Company having an approximate boiling point of 240°C), an ester, such as one of the type used to make synthetic lubricating oils.

B To a 500 ml three neck flask is added 76.9 g of a naphthenic base lubricating oil having a viscosity of 37 mm²/s at 38°C. To this oil is added 36.4 g hydrogenated tallow fatty acids, 31.3 grams benzoic acid, 23.1 g acetic acid, and finally 78.5 grams aluminum isopropoxide. This mixture is stirred and the temperature gradually increased to a point where isopropyl alcohol begins to distill off. As the distillation continues, temperature readings are taken at 60 minute intervals and the following Table results:

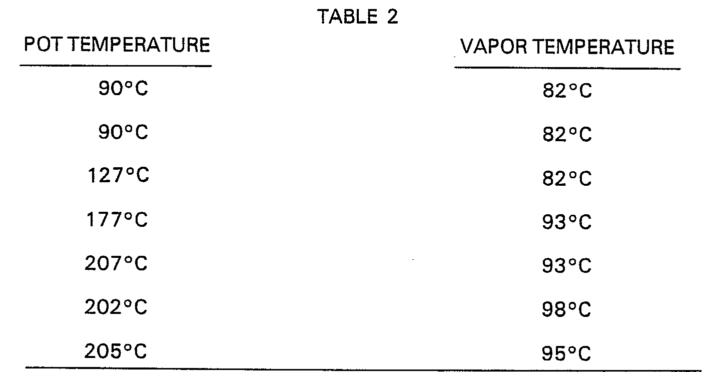

During the distillation, a total of 2 moles of isopropyl alcohol are removed after which one mole of isopropyl acetate is removed, all on a theoretical basis. The reaction mixture is thereafter allowed to cool to room temperature. The product is a high melting resilient solid, dark amber and relatively clear. The aluminum was analyzed to be 6.19% which indicates a 50% solution of mixed oxyaluminum stearate (hydrogenated taliow) benzoate in 37 mm²/s naphthenic base oil. The product has a stearate to benzoate mole ratio of 1:2.

C To a 500 ml three neck flask is added 78.1 grams isopropyl octoate. To this high boiling ester is added 51.1 grams isostearic acid (Emersol 875, Emery Industries, Inc.), 21.9 grams benzoic acid, 21.6 grams acetic acid and finally 73.5 grams aluminum isopropoxide. This mixture is stirred and the temperature gradually increased to a point where isopropyl alcohol begins to distill off. As the distillation continues, temperature readings are taken at bi-hourly intervals and the following Table results.

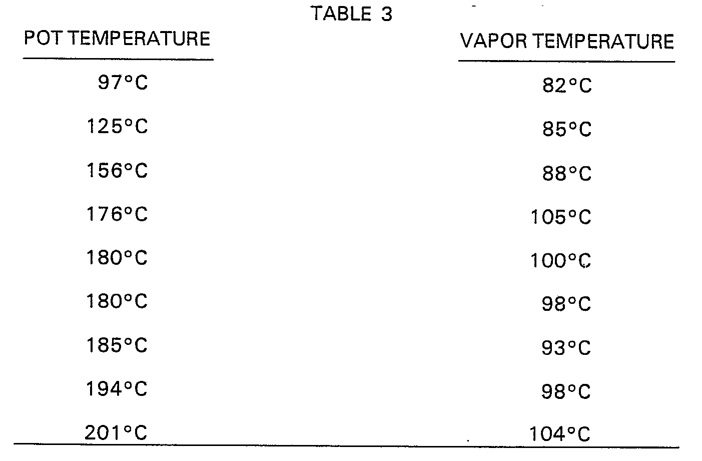

During the distillation, a total of 2 moles of isopropyl alcohol are removed after which one mole of isopropyl acetate is removed, all on a theoretical basis. The reaction mixture is thereafter allowed to cool to room temperature. The product is a light amber liquid relatively clear. The aluminum is analyzed to be 5.70% which indicates a 50% solution of oxyaluminum isostearate/benzoate in isopropyl octoate. The product has an isostearate to benzoate mole ratio of 1:1, and can be converted to the solvent free state by distilling off the isopropyl octoate preferably under reduced pressure.

D To a 3 litre glass resin kettle equipped with a stirring motor and a lid with 3 openings is added the following ingredients: 687.3 grams hydrogenated tallow fatty acids, 503.7 grams benzoic acid, and 673.9 grams isopropyl alcohol. This mixture is heated until it becomes a homogenous clear solution at approximately 60°C. To this mixture is then added 673.9 grams aluminum isopropylate. Heat is then applied to the reaction vessel until it rises to a temperature where isopropyl alcohol begins to distill off. The distillation is continued and periodic temperature readings are taken and the following Table results.

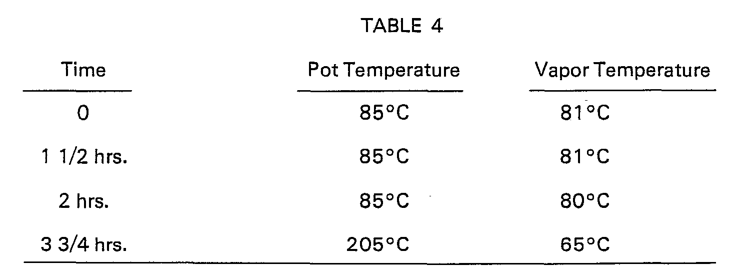

During the above distillation procedure, both the added isopropyl alcohol and the isopropyl alcohol produced by the reaction process are removed from the reaction vessel on a theoretical basis. Heating is continued at 200°C for 1 1/2 hours and then the reaction mixture is allowed to cool. The product is a light amber clear oily liquid. The aluminum is analyzed to be 5.86% and by further analysis it is determined that the oxyaluminum acylate contained 85% benzoic radicals. The oxyaluminum acylate is dissolved in a mixture of isopropyl benzoate and isopropyl hydrogenated tallowate.

E To a 1000 ml. 3-neck flask is added 198.4 grams Coray 22 oil (lubricating base oil having an approximate viscosity of 87 mm²/sat 38°C). To this oil in such a flask is added the following ingredients: 50 grams isopropyl alcohol, 48 grams acetic acid, 55.5 grams hyrogenated tallow fatty acids, 73.3 grams benzoic acid. This mixture is warmed slightly to produce a homogenous clear liquid. The temperature is then raised to 65°C and at this point is added to the system 163.4 grams aluminum isopropylate.

This mixture is stirred and the temperature gradually increased to a point where isopropanol begins to distill off. As the distillation continues periodic temperature readings are taken and the following Table results:

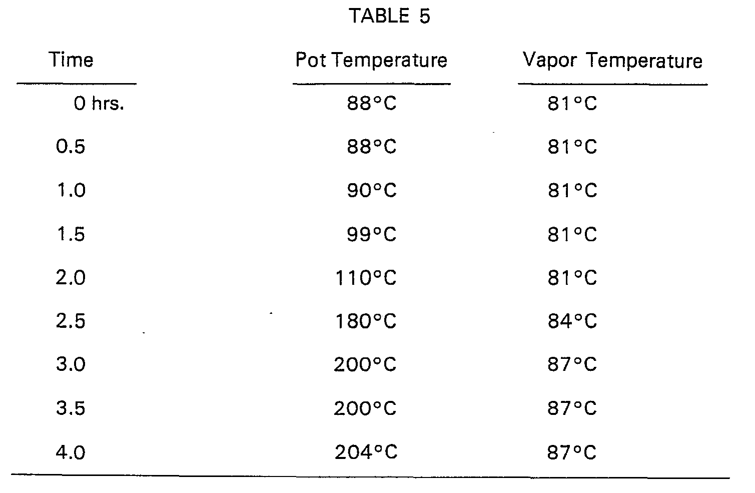

During the distillation a total of 2 moles isopropyl alcohol are removed after which 1 mole of isopropyl acetate is removed all on a theoretical basis. The reaction mixture is thereafter allowed to cool to room temperature. The product is a clear solid amber material having a melting point of approximately 130°C and by calculation is found to contain 5.44% aluminum indicating a 40.9% solution (in 87 mm²/s 38°C lubricating oil) of mixed oxyaluminum stearate/benzoate wherein the mole percent benzoate is 75%.

F To a 22 litre 3-neck flask is added the following ingredients: 4,998.6 grams hydrogenated tallow fatty acid, 2,197.8 grams benzoic acid and 3,816 grams isopropanol. This mixture is heated to approximately 60°C at which point the mixture is a clear low viscosity homogenous liquid. To this mixture is then added 3,675.6 grams granulated aluminum isopropylate. Heat is applied to the flask and the temperature gradually raised to the point where isopropanol begins to distill off. As the distillation continues temperature readings are taken at 60 minute intervals and the following Table results:

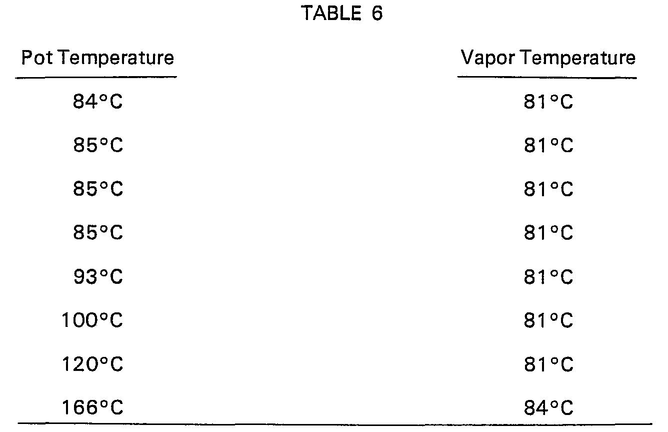

At this point, the heating causes the temperature to begin rising much more rapidly and it reaches 200°C within another hour. During the time of the first and second steps of heating, both the added isopropyl alcohol and 2 moles of produced isopropyl alcohol on a theoretical basis are removed from the flask. The temperature is then maintained at 200°C for one more hour after which it is allowed to cool. The product is a light amber clear liquid which is analyzed to be 5.67% aluminum and by further analysis it is determined that the oxyaluminum acylate so produced contained 75.3% benzoic radicals. The oxyaluminum acylate so produced contained 75.3% benzoic radicals. The oxyaluminum acylate is dissolved in a mixture of isopropyl benzoate and isopropyl hydrogenated tallowate.

G To a 1,000 ml. 3-neck flask the following ingredients are placed: 333.2 grams hydrogenated tallow fatty acid, 48.8 grams benzoic acid, and 67.5 grams isopropyl alcohol. This mixture is heated to approximately 80°C at point the contents of the flask comprises a homogenous clear liquid system. To the flask next is added 272.3 grams of a 60% solution of aluminum isopropylate in isopropanol. This mixture is stirred and heat is applied to the flask until isopropyl alcohol begins to distill off. As the distillation continues, temperature readings are taken at 30 minute intervals and the following Table results:

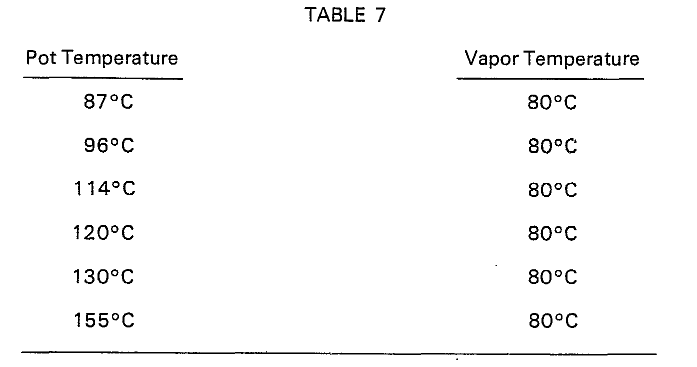

At this point, 92% of the theoretical isopropyl alcohol has been distilled off. More heat is then applied to the flask causing the temperature to rise to 200°C over a period of an hour. During this time, the remainder of the alcohol on a theoretical basis is distilled off of the reaction mixture. As the temperature approaches 200°, it is observed that the mixture in the flask is a low viscosity clear amber liquid. The temperature is maintained at 200°C for one hour. The reaction mixture is thereafter allowed to cool to room temperature. The product is a low viscosity clear amber liquid. The aluminum is analyzed to be 4.80% and by analysis the oxyaluminum acylate is found to have 42.7% benzoic radicals. The oxyaluminum acylate is dissolved in a mixture of isopropyl benzoate and isopropyl hydrogenated tallowate.

### Example 1

To 85 grams of the same grease base oil as defined in A above contained in a beaker is added 10.2 grams of the product obtained in A. The resulting mixture is stirred and gradually heated to 1 10°C where it is observed that a clear solution results. At this point, there is added to the heated system simultaneously 3.7 grams of hydrogenated tallow fatty acid and 1.1 gram of benzoic acid with stirring. The amount of the acids added in this Example is calculated in such a manner as to produce a "final soap" in situ which has a molar ratio of 1.1 to 0.9 fatty to benzoyl groups and which contains one hydroxyl group per aluminum atom. Heating is continued and the temperature is gradually raised to 140°C. After the acids are added a slight haze forms which disappears by the time the temperature reaches 140°C. With continuued heating, the temperature of the system is thereafter gradually increased to 180°C at which time heating is discontinued. After the acids are added, and as the temperature is thus gradually increased, gradual thickening of the system is observed. The thickening takes place in less than one hour due to the elimination of the step where alcohol is boiled off.

The product at room temperature is a clear grease, dark amber in color.

The thickening during heating as above described indicates the occurrence of a reaction between the oxyaluminum stearate benzoate and the added acids. It is believed thickening does not occur unless hydroxyl groups are present. Therefore, the reaction involved is representable by the following illustrative equation: 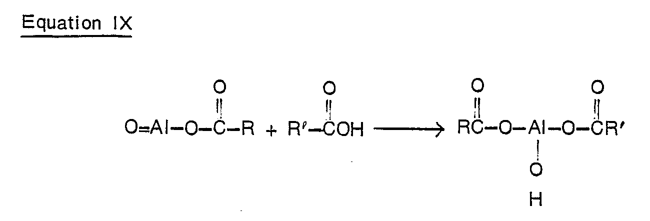 where R represents a mixture of fatty acid radicals and benzoic acid radicals in a molar ratio of 1:1 present in the organoaluminum compound starting material and R' represents a mixture of fatty acid radicals and benzoate acid radicals in a molar ratio of 1.2 to 0.8 added during grease manufacture. Thus, this grease product contains a diacyl monohydroxy aluminum soap derived from the starting oxyaluminum stearate benzoate, through reaction with the added stearic and benzoic acids. Said soap containing a molar ratio of 1.1 to 0.9 fatty radicals to benzoyl radicals and having approximately one. hydroxyl group per aluminum atom.

In this Example, the stearic acid could have been added before the benzoic acid, if desired. Also, in this Example, the ratio of acids added could be changed so that the final soap contains a molar ratio of 1:1 fatty radicals to benzoyl radicals, or any other ratio desired.

In this Example, the starting materials are substantially anhydrous. No water or alcohol is added to the system during processing and no water or alcohol is evolved from the system during processing. Further, no water or alcohol is found to be present in the system after processing.

### Example 2

To 85 grams of the above characterized grease base oil used in A and B contained in a beaker is added 9.4 grams of the product from B. The mixture is stirred and the temperature is raised to 170°C and held for 45 minutes until the mixed aluminum compounds dissolved. The temperature is then allowed to recede to 1 10°C at which point there is added to the system simultaneously 4.7 grams of hydrogenated tallow fatty acids and 0.8 grams benzoic acid with stirring. The temperature is then raised slowly to 180°C at which time the heating is discontinued. Gradual thickening is observed after the acids are added and as the temperature is gradually increased. The product is a clear heavy grease, dark amber in color. The aluminum soap which was made in situ is a mixed soap with a molar ratio of 1.1 to 0.9 fatty to benzoyl radicals and which contains one hydroxyl group per aluminum atom.

### Comparative Example 1

To a 500 ml three necked flask is added 108.8 grams Magiesol 47 (Magie Bros. Oil Co., Franklin Park, IL) which is an aliphatic solvent having a boiling point of approximately 250°C. To this sovlent is added 75.73 grams hydrogenated tallow fatty acids, 16.28 grams benzoic acids and 81.68 grams aluminum isopropoxide. This mixture is under agitation and the temperatures slowly increased to a point where isopropyl alcohol starts to distill off. When the pot temperature reaches 115°C and one mole of alcohol has been taken off on a theoretical basis, 24 grams of acetic acid are introduced into the reaction mixture through a dropping funnel. Agitation is continued and the flask temperature held between 115 and 122°C until the second mole of isopropyl alcohol (theoretical basis) is distilled off. The temperature is gradually increased and isopropyl acetate begins to distill over. By the time the temperature reaches 246°C, one theoretical mole of isorpropyl acetate has been distilled off. The reaction mixture is thereafter allowed to cool to room temperature. The product is a liquid light amber in color and substantially clear. The product is analyzed to contain 4.72% aluminum which indicates that the product is 47.5% oxyaluminum stearate/benzoate in Magiesol 47 aliphatic solvent. The product has a stearate to benzoate mole ratio of 2:1 and is representative of the prior art compounds disclosed in Harson British Patent No. 825,878.

### Comparative Example 2

283.5 grams of the same base oil as employed in Examples 1 and 2, contained in a beaker is added 12.4 grams of the product from Comparative Example 1. The mixture is heated with stirring to a temperature of 130°C at which temperature there is added to the system simultaneously 2.65 grams of hydrogenated tallow fatty acid and 1.5 grams of benzoic acid with stirring. As both acids are simultaneously added, it is observed that the resultant mixture of lubricating base oil, aluminum derivative and acids turns cloudy. The temperature is then raised to 200°C for 15 minutes. During the time of increasing the temperature the cloud diminishes somewhat, but does not entirely disappear. Holding the mixture at a temperature of 200°C for 15 minutes does not improve the clarity of the mixture. Although thickening occurs during the increasing of the temperature, the viscosity of the mixture is not as high as greases made with compounds of the present invention.

### Example 3

To 84.5 grams of same grease base oil used in A contained in a beaker is added 10.8 grams of the product solution obtained in C. The resulting clear mixture is stirred and gradually heated to 90°C. At this point, there is added to the heated system simultaneously 3.2 grams hydrogenated tallow fatty acids and 1.4 grams benzoic acid with stirring. The amount of the acids added in this Example is calculated in such a manner as to produce a "final soap" in situ which has a molar ratio of 1:1 fatty to benzoyl groups and which contains one hydroxyl group per aluminum atom and can be described as a balanced mixed soap. The temperature is then raised slowly to 190°C at which time the heating is discontinued. Gradual thickening is observed after the acids are added and as the temperature is increased. The product is a clear, heavy grease, dark amber in color.

### Example 4

To 84.5 grams of same grease base oil used in A contained in a beaker is added 10.4 grams of the product solution obtained in C. The resulting clear mixture is stirred and gradually heated to 90°C. At this point, there is added to the heated system simultaneously 3.7 grams hydrogenated tallow fatty acids and 1.1 grams benzoic acid with stirring. The temperature is then raised slowly to 190°C at which time the heating is discontinued. Gradual thickening is observed after the acids are added and as the temperature is increased. The product is a clear, heavy grease, dark amber in color. The aluminum soap which is made in situ in this example is a mixed soap with a slightly unbalanced molar ratio of fatty to benzoyl groups of 1.1 to 0.9 and contains one hydroxyl group per aluminum atom.

### Example 5

To 303.7 grams of a grease base oil having the viscosity at 38°C of 380 mm²/s is added 29.8 grams of the compound from D. The resulting mixture is stirred and gradually heated to 90°C where it is observed that a homogenous, relatively clear mixture results. At this point, there is added to the heated system simultaneously 16.3 grams hydrogenated tallow fatty acid and 0.1 grams benzoic acid with stirring. The amount of ingredients added to the base oil in this Example is calculated in such a manner as to produce a final grease with an aluminum content of 0.5% aluminum metal, a fatty to benzoic ratio of 1.1 to 0.9 and a ratio of 1.92 moles total acids per atoms of aluminum. Heating is continued and the temperature is gradually raised to a temperature of 200°C and the mixture is held at 200°C for one-half hour. After the acids are added, and as the temperature is thus gradually increased, gradual thickening of the system is observed. The reaction mixture remains clear throughout the heating process and results in a clear grease. No acetic acid odor is detected during this process. After the reaction mixture is held for one-half hour at 200°C, it is allowed to cool and physical properties are determined. The resultant clear grease has a dropping point of 242°C and an unworked penetration of 307. After working 60 strokes in a standard grease worker, the penetration is 314. The grease remains soft and pliable after standing overnight indicating the absence of false set properties.

### Comparative Example 3

### Attempt to make 85 mole% benzoic mixed organoaluminum compound via acetic acid method

To a 1000 ml. 3-neck flask is added the following ingredients: 183.2 grams Coray 22 which is lubricating base oil having an approximate viscosity of 87 mm²/s at 38°C, 50 grams isopropyl alcohol, 48 grams glacial acetic acid, 33.3 grams hydrogenated tallow fatty acids, and 83.0 grams benzoic acid. The temperature of this mixture is raised to 55°C at which point 163.4 grams powdered aluminum isopropylate is added to the flask. This mixture is stirred and gradually increased to a point where isopropanol begins to distill off. As the distillation continues, periodic temperature readings are taken and the following Table results.

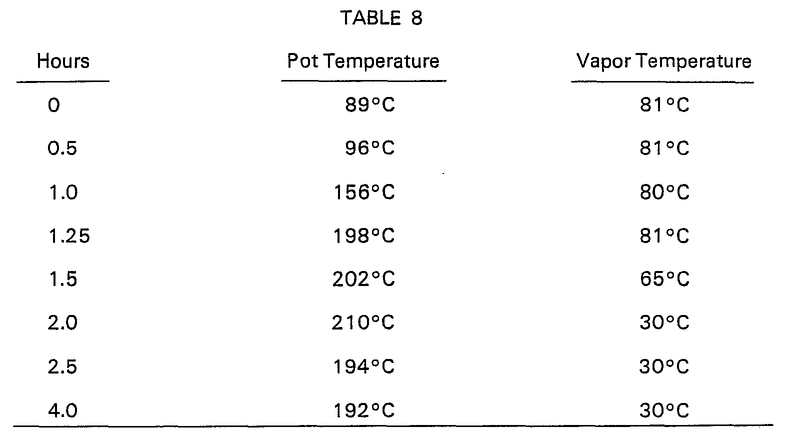

During this distillation procedure, the material in the flask never goes through a clear state and does not end up clear. It is only thin when the temperature rises to approximately 200°C; however, it is still an opaque liquid at this point. Very little distillate is taken off between the temperatures of 156°C and 200°C indicating that only a small amount of isopropyl acetate ester is formed by this reaction. The total distillate measures 149 grams and accounts for little more than the theoretical isopropanol released by the reaction with the acids plus the 50 grams isopropyl alcohol added to facilitate dispersion of the initial materials.

### Comparative Example 4

The procedure in Comparative Example 3 is repeated to make sure that the results are reliable. The same quantities of ingredients are added in the same order and the mixture is stirred and the temperature gradually increased to a point where isopropanol begins to distill off. As the distillation continues temperature readings are taken and the following Table results:

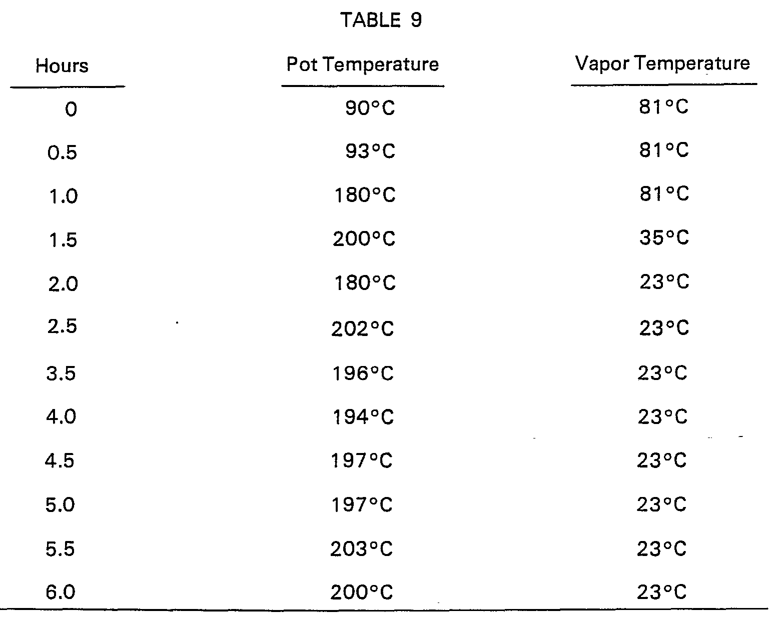

During this procedure extra care is taken to ensure that excessive heat does not damage or interfere with the reaction. At no time does the temperature ever exceed 205°C. As can be seen by the Table, no appreciable isopropyl acetate is taken off as indicated by the low vapor temperatures which are recorded as the pot temperature moves towards 200°C. As with Comparative Example 3, the mixture in the flask never turns clear and remains an opaque hetergenous mixture.

### Comparative Example 5

An attempt is made to make a grease from the material produced in Comparative Example 4. 302.2 grams of the same grease base oil as employed in Example 5 are placed in a beaker which contains a magnetic stir bar. This beaker is placed on a hot plate and heated with stirring to a temperature of 160°C. 31.4 grams of the product obtained from Comparative Example 4 is melted and added to the oil. During this addition, it is noted that solid particles start forming immediately. The size of the particles are 1,6 - 3,2 mm in diameter. The mixture is then heated to 200°C in an attempt to disperse the particles, but this is not successful. The temperature is then lowered to 95°C at which temperature 16.3 grams hydrogenated tallow fatty acid are added slowly to the mixture under agitation. Then, 0.1 gram benzoic acid is added immediately following this addition of the hydrogenate tallow fatty acids and it is noted that the temperature is 100°C when the benzoic acid is in. The particles noted above do not disappear. The mixture is then raised again to a temperature of 200°C. The mixture thickens slightly, but still contains the solid opaque particles. This is not usable grease.

### Example 6

303.5 grams of the same grease base oil as employed in Example 5 are placed in a beaker which contains a magnetic stir bar. This beaker is placed on a hot plate and is heated with stirring to a temperature of 160°C. 32.2 grams of the product obtained from E is melted and added to the oil. Heating is continued with stirring and the temperature is gradually raised to a temperature of 200°C and it is observed that the mixture is uniformly dispersed. The temperature is then lowered to 95°C at which temperature 14.5 grams hydrogenated tallow fatty acid are added slowly to the mixture under agitation. Then, 0.9 grams benzoic acid are added immediately following this addition of the hydrogenated tallow fatty acids. The amount of ingredients added to the base oil in this Example is calculated in such a manner as to produce a final grease with an aluminum content of 0.5% aluminum metal, a fatty to benzoic ratio of 1.1 to 0.9 and a ratio of 1.92 moles total acids per atom of aluminum. The mixture is again raised to a temperature of 200°C and during such period of heating is observed an acid odor resembling acetic acid.

After the acids are added, and as the temperature is thus gradually increased, gradual thickening of the system is observed. The reaction mixture remains clear throughout the heating process and results in a clear grease. After the mixture is held for 15 minutes at 200°C, it is allowed to cool and physical properties are determined. The resultant clear grease has a dropping point of 250°C and an unworked penetration of 301. After working 60 strokes in a standard grease worker, the penetration is 314.

### Example 7

To 303.8 grams of a grease base oil having the viscosity at 38°C of 380 mm²/s is added 30.8 grams of the compound from F. The resulting mixture is stirred and gradually heated to 90°C where it is observed that a clear solution results. At this point there is added to the heated system simultaneously 14.3 grams hydrogenated tallow fatty acid and 0.9 grams benzoic acid with stirring. The amount of ingredients added to the base oil in this Example is calculated in such a manner as to produce a final grease with an aluminum content of 0.5% aluminum metal, a fatty to benzoic ratio of 1.1 to 0.9 and a ratio of 1.92 moles total acids per atom of aluminum. Heating is continued and the temperature is gradually raised to a temperature of 200°C and the mixture is held at 200°C for one-half hour. After the acids are added, and as the temperature is thus gradually increased, gradual thickening of the system is observed. The reaction mixture remains clear throughout the heating process and results in a clear grease. No acetic acid odor is detected during this process. After the reaction mixture is held for one-half hour at 200°C, it is allowed to cool and physical properties are determined. The resultant clear grease has a dropping point of 265°C and an unworked penetration of 245. After working 60 strokes in a standard grease worker, the penetration is 286. The grease remains soft and pliable after standing overnight, indicating the absence of false set properties.

### Example 8

To 301.4 grams of a grease base oil having the viscosity at 38°C of 380 mm²/s is added 36.4 grams of the compound from G. The resulting mixture is stirred and gradually heated to 90°C where it is observed that a clear solution results. At this point there is added to the heated system simultaneously 8.7 grams hydrogenated tallow fatty acid and 3.4 grams benzoic acid with stirring. The amount of ingredients added to the base oil in this Example is calculated in such a manner as to produce a final grease with an aluminum content of 0.5% aluminum metal, a fatty to benzoid ratio of 1.1 to 0.9 and a ratio of 1.92 moles total acids per atom of aluminum. Heating is continued and the temperature is gradually raised to a temperature of 200°C and the mixture is held at 200°C for one-half hour. After the acids are added, and as the temperature is thus gradually increased, gradual thickening of the system is observed. The reaction mixture remains clear throughout the heating process and results in a clear grease. No acetic acid odor is detected during this process. After the reaction mixture is held for one-half hour at 200°C, it is allowed to cool and physical properties are determined. The resultant clear grease has a dropping point of and an unworked penetration of 311. After working 60 strokes in a standard grease worker, the penetration is 288. The grease remains soft and pliable after standing overnight indicating the absence of false set properties.

### The starting mixture for the continuous process

A carboxylic acid mixture suitable for use in the continuous process of the present invention is prepared as follows:
a) Into a 56,8 I epoxy lined drum is charged 22,8 kg of a grease base oil having a viscosity at 38°C of no more than about 390 mm²/s. This drum is provided with an impeller driven by an electric motor and also with an external electric heating device to heat the contents to a predetermined temperature. The oil is agitated and raised to a temperature of about 90°C after which is added 2,14 kg of hydrogenated tallow fatty acid and 112,5 g benzoic acid.
b) 22,8 kg grease base oil, 2,34 kg hydrogenated tallow fatty acids and 67,5 g benzoic acid were used.
c) 22,8 kg grease base oil and 2,7 kg hydrogenated tallow fatty acids were used.
d) 23 kg grease base oil, 1,48 kg hydrogenated tallow fatty acids and 0,4 kg benzoic acid were used.

### The organolauminum compounds for use in the continuous process

a) To a 22 litre 3-neck flask is added the following ingredients: 4,499 grams hydrogenated tallow fatty acid, 2,418 grams benzoic acid and 3,672 grams isopropanol. This mixture is heated to approximately 60°C at which point the mixture is a clear low viscosity homogenous liquid. To this mixture is then added 3,675.6 grams granulated aluminum isopropylate. Heat is applied to the flask and temperature gradually raised to the point where isopropanol begins to distill off. As the distillation continues periodic temperature readings are taken and the following Table results:

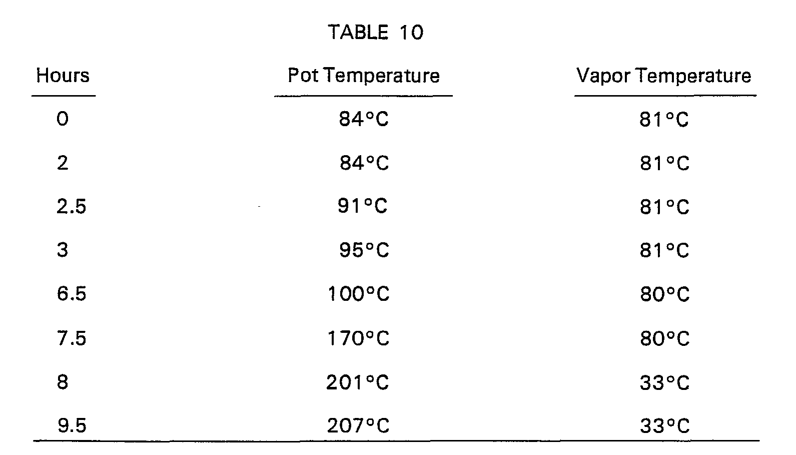

During the heating, both the added isopropyl alcohol and 2 moles of produced isopropyl alcohol on a theoretical basis are removed from the flask. The flask is then allowed to cool. The product is a light amber clear liquid which is analyzed to be 5.96 aluminum and by further analysis it is determined that the organoaluminum compound so produced contained 81% benzoic radicals. It is dissolved in a mixture of isopropyl benzoate and isopropyl hydrogenated tallowate.

[3) 2,332 g Coray oil 22 (lubricating base oil) having an approximate viscosity of 87 mm²/s at 30°C, 1,32 kg acetic acid, 2,996 kg hydrogenated tallow fatty acids and 1,342 kg benzoic acid were used. After raising the temperature to 65°C 4,492 kg aluminum iso propylate were added. This mixture is stirred and the temperature gradually increased to a point where isopropanol begins to distill off.

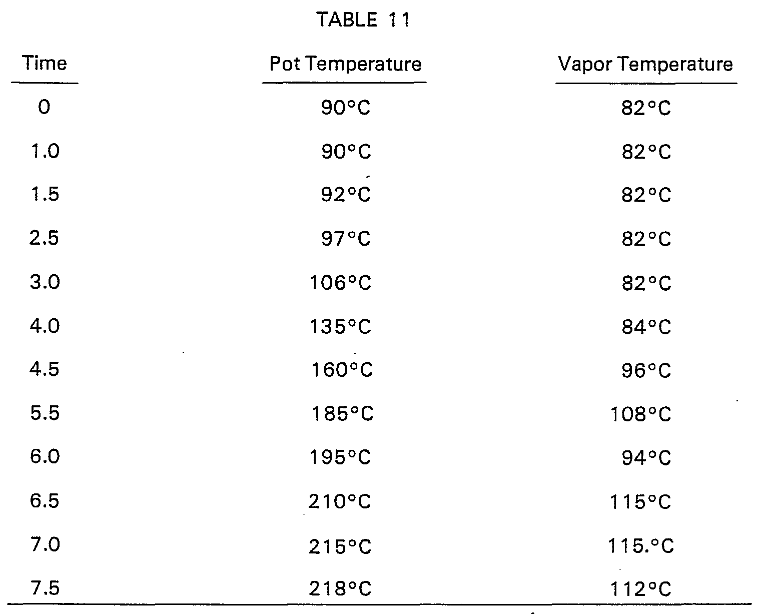

After seven and one-half hours of total elapsed time, the heat is turned off and an additional 2,332 grams Coray 22 base oil were added to the flask. During the distillation a total of 2 moles isopropyl alcohol are removed after which 1 mole of isopropyl acetate is removed all on a theoretical basis. The reaction mixture is thereafter allowed to cool to room temperature. The product is a clear high viscosity amber liquid which is found by analysis to contain 5.77% aluminum indicating approximately 50% solution of mixed oxyaluminum stearate/benzoate wherein the mole percent benzoate is 50%.

y) Into a 56,8 I epoxy lined drum is charged 22,8 kg of a grease base oil having a viscosity at 38°C of no more than 390 mm²/s. This drum is provided with an impeller driven by an electric motor and also with an external electric heating device to heat the contents to a predetermined temperature. The oil is agitated and raised to a temperature of about 90°C after which is added thereto 4,6 kg of an oxyaluminum acylate intermediate composition prepared as described in F. The entire resulting mixture is brought to a temperature estimated to be about 90°C, and mixing is continued until a homogenous clear solution is obtained, wherein the total weight percentage of mixed oxyaluminum acylate is estimated to be about 7.0 weight percent. The total weight percent of high boiling isopropanol mixed acid esters is estimated to be about 9.7 weight percent.

### Example 9

The drum containing the oxyaluminum acylate solution of y and the drum containing the acid solution of a) are both connected by suitable piping to a Kenix standard static mixer, (which has an internal diameter of 9,5 mm and contains 21 elements) through metering pumps. The static mixer is in turn interconnected through a surge tank/booster pump combination device with a coiled copper tube, approximately 2,45 m in length and having an internal diameter of 9,5 mm. This coiled tubing is immersed in a drum of heat exchange oil which has been heated to a temperature sufficient to maintain the interior of the coiled tubing at a temperature of not less than 200°C. The discharge end of the reactor coil is placed over a 56,8 I receiving drum which is equipped with a cooling coil through which water is circulated.

The contents of the first drum are charged into the feed end of the static mixer at a rate estimated to be 0.473 I/min. Thus, the total amount of aluminum in the combined mixture entering the static mixer is calculated to be about 0.5 weight percent (based upon total composition in the static mixer). Also, in the static mixer, the mole ratio of the total amount of aluminum to total carboxylic acids is calculated to be 1:1.92, the total carboxylic acids here defined as the acids added from the second drum combined with the acylate groups present as part of the oxyaluminum acylate composition. The effluent from the static mixture is believed to be homogenous and uniform in composition. After passing through the surge tank/booster pump device, the flow rate of the combined mixture entering the tube reactor is estimated to be 0,946 I/min. The temperature of the material being discharged from the reactor is estimated to be about 200°C. The product from the tubular reactor is discharged into the receiving container and cooled to a lower temperature by the cooling coils. The product is a clear grease having a dropping point estimated to be higher than 246°C and an unworked penetration estimated to be less than 300.

### Example 10

Into a 56,8 I epoxy lined drum is charged 22,8 kg of a grease base oil having a viscosity at 38°C of no more than 390 mm²/s. This drum is provided with an impeller driven by an electric motor and also with an external electric heating device to heat the contents to a predetermined temperature. The oil is agitated and raised to a temperature of about 90°C after which is added 4,4 kg of an aluminum acylate prepared as described in a). The entire resulting mixture is brought to a temperature estimated to be 90°C, and mixing is continued until a homogenous clear solution is obtained, wherein the total weight percentage of mixed aluminum acylate is estimated to be 6.7 weight percent, the total weight percent of high boiling isopropanol mixed acid esters is estimated to be 9.5 weight percent, with the balance up to 100 weight percent being the grease base oil as described above.

The drum containing the aluminum acylate solution described above and the drum containing the acid solution as described in b) are both fed into the same equipment as described in Example 9.

The contents of the first drum are charged into the feed end of the static mixer at a rate estimated to be 0,473 I/min while the contents of the second drum are similarly charged at a rate estimated to be 0,473 I/min. Thus, the total amount of aluminum in the combined mixture entering the static mixer is calculated to be 0.5 weight percent (based upon total composition in the static mixer). Also, in the static mixer, the mole ratio of the total amount of aluminum to total carboxylic acids is calculated to be 1 :1.92, the total carboxylic acids here defined as the acids added from the second drum combined with the acylate groups present as part of the aluminum acylate composition. The effluent from the static mixture is believed to be homogenous and uniform in composition. After passing through the surge tank/booster pump device, the flow rate of the combined mixture entering the tube reactor is estimated to be 0,946 I/min. The temperature of the material being discharged from the reactor is estimated to be about 200°C. The product from the tubular reactor is discharged into the receiving container and cooled to a lower temperature by the cooling coils. The product is a clear grease having a dropping point estimated to be higher than 246°C and an unworked penetration estimated to be less than 300.

### Example 11

Into a 56,8 I epoxy lined drum is charged 22,8 kg of a grease base oil having a viscosity at 38°C of no more than 390 mm²/s. This drum is provided with an impeller driven by an electric motor and also with an external electric heating device to heat the contents to a predetermined temperature. The oil is agitated and raised to a temperature of about 90°C after which is added 4,4 kg of an aluminum acylate prepared as described in a). The entire resulting mixture is brought to a temperature estimated to be 90°C, and mixing is continued until homogenous clear solution is obtained, wherein the total weight percentage of mixed aluminum acylate is estimated to be 6.7 weight percent, the total weight percent of high boiling isopropanol mixed acid esters is estimated to be 9.5 weight percent, the balance up to 100 weight percent being the grease base oil as described above.

The drum containing the aluminum acylate solution described above and the drum containing the acid solution as described in c) are both fed into the same equipment as described in Example 9.

The contents of the first drum are charged into the feed end of the static mixer at a rate estimated to be 0,473 I/min while the contents of the second drum are similarly charged at a rate estimated to be 0,473 I/min. Thus, the total amount of aluminum in the combined mixture entering the static mixer is calculated to be 0.5 weight percent (based upon total composition in the static mixer). Also, in the static mixer, the mole ratio of the total amount of aluminum to total carboxylic acids is calculated to be 1:2, the total carboxylic acids here defined as the acids added from the second drum combined with the acylate groups present as part of the aluminum acylate composition. The effluent from the static mixture is believed to be homogenous and uniform in composition. After passing through the surge tank/booster pump device, the flow rate of the combined mixture entering the tube reactor is estimated to be 0,946 I/min. The temperature of the material being discharged from the reactor is estimated to be about 200°C. The product from the tubular reactor is discharged into the receiving container and cooled to a lower temperature by the cooling coils. The product is a clear grease having a dropping point estimated to be higher than 246°C, and an unworked penetration estimated to be less than 300.

### Example 12

Into a 56,8 I epoxy lined drum is charged 23 kg of a grease base oil having a viscosity at 38°C of no more than 390 mm²/s. This drum is provided with an impeller driven by an electric motor and also with an external electric heating device to heat the contents to a predetermined temperature. The oil is agitated and raised to a temperature of about 90°C after which is added 4,5 kg of an aluminum acylate prepared as described in _{[3}). The entire resulting mixture is brought to a temperature estimated to be about 90°C, and mixing is continued until a homogenous clear solution is obtained, wherein the total weight percentage of mixed aluminum acylate is estimated to be 8.2 weight percent, with the balance up to 100 weight percent being grease base oil.

The drum containing the aluminum acylate solution described above and the drum containing the acid solution as described in d) are both connected to the same equipment as described in Example 9.

The contents of the first drum are charged into the feed end of the static mixer at a rate estimated to be 0,473 I/min while the contents of the second drum are similarly charged at a rate estimated to be 0,473 I/min. Thus, the total amount of aluminum in the combined mixture entering the static mixer is calculated to be 0.5 weight percent (based upon total composition in the static mixer). Also, in the static mixer, the mole ratio of the total amount of aluminum to total carboxylic acids is calculated to be 1:1.92, the total carboxylic acids here defined as the acids added from the second drum combined with the acylate groups present as part of the aluminum acylate composition. The effluent from the static mixture is believed to be homogenous and uniform in composition. After passing through the surge tank/booster pump device, the flow rate of the combined mixture entering the tube reactor is estimated to be 0,946 I/min. The temperature of the material being discharged from the reactor is estimated to be 200°C. The product from the tubular reactor is discharged into the receiving container and cooled to a lower temperature by the cooling coils. The product is a clear grease having a dropping point estimated to be higher than 246°C, and an unworked penetration estimated to be less than 300.

## Claims

1. A process for making a grease from a starting oil having a viscosity at 38°C of from 7,56-10800 mm²/s and an organoaluminium compound characterized by contacting in said oil at least one aliphatic monocarboxylic acid containing from 8 to 40 carbon atoms and/or an aromatic monocarboxylic acid containing 7 to 17 carbon atoms with at least one compound selected from the group having the formula 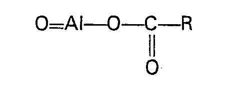 and of the formula 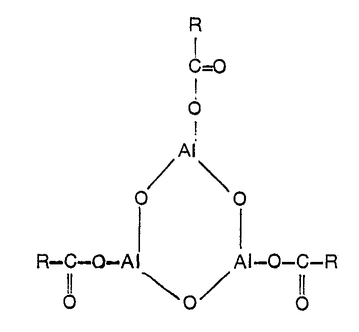 wherein R is selected from the group of radicals consisting of: Type (A) aliphatic hydrocarbon radicals each containing from 10 to 38 carbon atoms, and Type (B) aromatic hydrocarbon radicals each containing from 6 to 16 carbon atoms, and wherein, in any given group of such compounds, the ratio of the number of radicals of said Type (B) to said Type (A) ranges from 2:3 to 19:1, both said carboxylic acid and said organolaluminum compound being dispersed in said oil, said contacting being carried out at a temperature range from 135 to 250°C to produce an aluminum monohydroxy diacylate.

2. A process according to claim 1 wherein R of Type (A) of the organoaluminum compound are radicals derived from hydrogenated tallow acids, hydrogenated fish oil acids, stearic acid or isostearic acid and R of Type (B) are derived from benzoic acid.

3. A continuous process according to claim 1 or 2 comprising the steps of simultaneously but sequentially: mixing a first dispersion of the organolaluminum compound as defined in claim 1 with a second dispersion of carboxylic acid in a first mixing zone to produce a substantially homogeneous product mixture wherein, in any given such organoaluminum compound, the mole percent of the number of radicals of said Type (B) radicals ranges from 40 to 95 with the balance up to 100 mole percent being said Type (A) radicals, said carboxylic acid being characterized by the formula 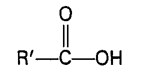 where R' is selected from aliphatic hydrocarbon radicals containing from 9 to 40 carbon atoms each and aromatic hydrocarbon radicals containing from 6 to 28 carbon atoms each, and wherein in any given such carboxylic acid the weight percent of said aromatic radicals ranges from and including 0 to 70% with the balance up to 100 weight percent of all said radicals being said aliphatic radicals, the carrier liquid for each of said first and said second dispersions comprising an inert organic liquid having a viscosity of 38°C of from 7,56 to 10800 mm²/s, the total amount of aluminum in said product mixture ranging from 0.01 to 2.0 weight percent based on total mixture weight, and the mole ratio of said total amount of aluminum to added said carboxylic acid material ranging from 0.75:1.25 to 1.25:0.75, charging said product mixture into an elongated reaction zone, passing said product mixture through said reaction zone while maintaining said reaction zone at a temperature ranging from 135 to 250°C for substantially complete reaction of said organoaluminum compound with said carboxylic acid.

4. The process of claim 3 wherein said first dispersion additionally contains an ester having the formula 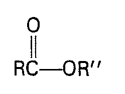 wherein R is as defined in claim 1 and R" comprises a lower alkyl radical, and wherein, in said first dispersion, the mole ratio of said ester to said organoaluminum compound ranges from 1.5:1 to 0.

5. The process of claim 3 wherein said first dispersion additionally contains a second organolaluminum compound which is characterized by the formula 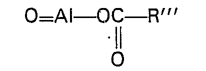 and by the formula 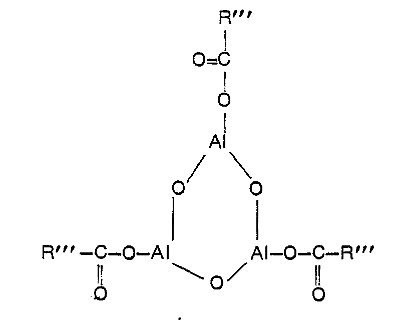 wherein R"' is as R defined above but additionally includes a further group of radicals consisting of Type (C) lower alkyl radicals, and wherein, in any given such organoaluminum compound on a 100 mole percent total basis, the mole percent of said Type (B) radicals ranges from 40 to 95, the mole percent of said Type (C) radicals ranges from 0 to 50, the mole percent of said Type (A) radicals ranges from 5 to 50.

## Revendications

1. Procédé de préparation d'une graisse à partir d'une huile d'une viscosité de 7,56 à 10 800 mm²/s à 38°C et d'un dérivé d'organo-aluminium, caractérisé en ce que l'on met en contact dans cette huile au moins un acide monocarboxylique aliphatique en Cₛ à C₄₀ et(ou) un acide monocarboxylique aromatique en C₇ à C₁₇ avec au moins un composé de la formule 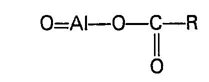 ou de la formule 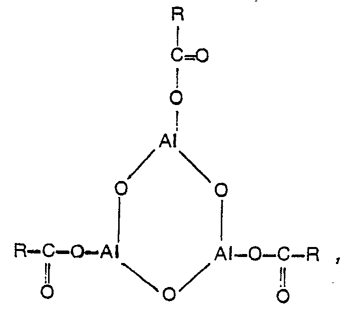 dans lesquelles R est choisi parmi les radicaux hydrocarbonés aliphatiques en C₁₀ à C₃₈ (type A) et les radicaux hydrocarbonés aromatiques en C₆ à C₁₆ (type B), le rapport entre le nombre de radicaux du type B et le nombre de radicaux du type A étant compris, dans un groupe quelconque de tels composés, entre 2:3 et 19:1, l'acide carboxylique et le dérivé d'organo-aluminium étant dispersés dans l'huile et le contact étant réalisé dans une gamme de températures allant de 135 à 250°C pour produire un monohydroxy-diacylate d'aluminium.

2. Procédé suivant la revendication 1, caractérisé en ce que les radicaux R du type A du dérivé d'organo-aluminium sont des radicaux dérivés d'acides de suif hydrogéné, d'acides d'huile de poisson hydrogénée, de l'acide stéarique ou de l'acide isostéarique et les radicaux R du type B dérivent de l'acide benzïque.

3. Procédé continu suivant la revendication 1 ou la revendication 2, comprenant les stades ci-après, réalisés simultanément, mais consécutivement: on mélange, dans une première zone de mélange, une première dispersion d'un dérivé d'organo-aluminium tel que défini dans la revendication 1 et une deuxième dispersion d'un acide carboxylique jusqu'à l'obtention d'un produit sensiblement homogène, le pourcentage molaire du nombre de radicaux du type B du dérivé d'organo-aluminium quelconque utilisé étant compris entre 40 et 95, le solde jusqu'à 100% molaires étant constitué de radicaux du type A, l'acide carboxylique étant caractérisé par. la formule 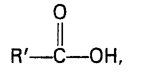 dans laquelle R' est choisi parmi les radicaux hydrocarbonés aliphatiques en C₉ à C₄₀ et les radicaux hydrocarbonés aromatiques en Cₛ à C₂₈₁ la proportion pondérale des radicaux aromatiques dans un acide carboxylique quelconque de ce genre se situant entre 0 et 70%, le solde jusqu'à 100% en poids de tous ces radicaux étant constitué de radicaux aliphatiques, le véhicule liquide pour la première et la deuxième dispersion comprenant un liquide organique inerte d'une viscosité de 7,56 à 10 800 mm²/s à 38°C, la teneur totale en aluminium du mélange produit étant comprise entre 0,01 et 2,0% en poids par rapport au poids total du mélange et le rapport molaire entre la teneur totale en aluminium et l'acide carboxylique ajouté étant compris entre 0,75:1,25 et 1,25:0,75; on introduit le mélange produit dans une zone de réaction oblongue et on lui fait traverser cette zone de réaction maintenue à une température comprise entre 135 et 250°C jusqu'à réaction sensiblement complète du dérivé d'organoaluminium et de l'acide carboxylique.

4. Procédé suivant la revendication 3, caractérisé en ce que la première dispersion contient en outre un ester de la formule 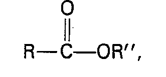 dans laquelle R possède la signification définié dans la revendication 1 et R" désigne un radical alkyle inférieur, la rapport molaire entre cet ester et le dérivé d'organo-aluminium dans la première dispersion étant compris entre 1,5:1 et 0.

5. Procédé suivant la revendication 3, caractérisé en ce que la première dispersion contient en outre un deuxième dérivé d'organo-aluminium, caractérisé par la formule 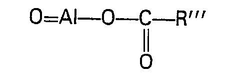 ou la formule 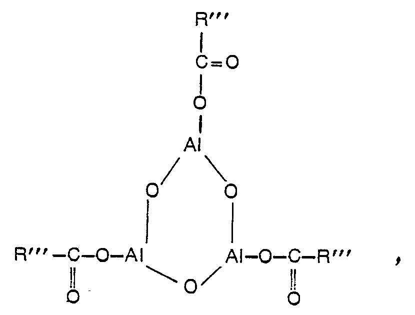 dans lesquelles R'" possède la signification définie pour R, mais peut de plus désigner des radicaux alkyle inférieurs (type C), un tel dérivé d'organo-aluminium quelconque contenant, sur un total de 100% molaires, entre 40 et 95% molaires de radicaux du type B, entre 0 et 50% molaires de radicaux du type C et entre 5 et 50% molaires de radicaux du type A.

## Patentansprüche

1. Verfahren zur Herstellung eines Schmierfettes aus einem Ausgangs-Öl mit einer Viskosität von 7,56 bis 10 800 mm²/s bei 38°C und einer organoaluminiumverbindung, dadurch gekennzeichnet, daß man in dem Öl dispergiert zumindest eine aliphatische Monocarbonsäure mit 8 bis 40 Kohlenstoffatomen und/oder eine aromatische Monocarbonsäure mit 7 bis 17 Kohlenstoffatomen mit zumindest einer Verbindung der Formel 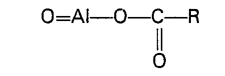 und/oder der Formel 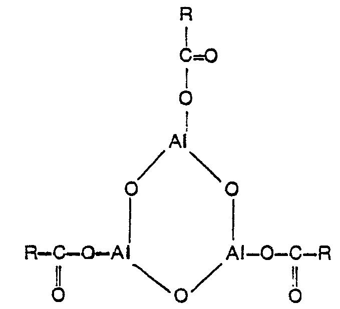 umsetzt, worin R (A) eine aliphatische Kohlenwasserstoffgruppe mit 10 bis 38 Kohlenstoffatomen und/oder (B) eine aromatische Kohlenwasserstoffgruppe mit 6 bis 16 Kohlenstoffatomen ist, wobei in jeder gegebenen Gruppe dieser Verbindungen das Verhältnis der Anzahl der Gruppen (B):(A) 2:3 bis 19:1 beträgt, und die Umsetzung bei einer Temperatur von 135 bis 250°C stattfindet unter der Bildung eines Aluminiummonohydroxydiacylats.

2. Verfahren nach Anspruch 1, dadurch gekennzeichnet, daß man eine Organoaluminiumverbindung umsetzt, deren Substituenten R von hydrierten Tallowsäuren, hydrierten Fischölsäuren, Stearinsäure oder Isostearinsäure abgeleitete Reste oder der Rest der Benzoesäure sind.

3. Kontinuierliches Verfahren nach Anspruch 1 oder 2, dadurch gekennzeichnet, daß man eine erste Dispersion der in Anspruch 1 definierten Organoaluminiumverbindung mit einer zweiten Dispersion der Carbonsäure in einer ersten Mischzone zu einem im wesentlichen homogenen Gemisch mischt, wobei in der bzw. den Organoaluminiumverbindung(en) die Anzahl der Gruppen (B) 40 bis 95 mol-%, Rest Gruppen (A), beträgt, die Carbonsäure der Formel 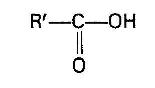 entspricht, in welcher R' eine aliphatische Kohlenwasserstoffgruppe mit 9 bis 40 Kohlenstoffatomen und/oder eine aromatische Kohlenwasserstoffgruppe mit 6 bis 28 Kohlenstoffatomen ist und der Gewichtsanteil der aromatischen Säuregruppen 0 bis 70%, Rest aliphatische Säuregruppen, beträgt und das Dispersionsmedium für die erste und zweite Dispersion eine inerte organische Flüssigkeit mit einer Viskosität von 7,56 bis 10 800 mm²/s bei 38°C ist und der gesamte Aluminiumgehalt in dem Gemisch 0,01 bis 2 Gew.-% - bezogen auf das Gemisch - und das Molverhältnis des gesamten Aluminiumgehaltes zu der Säure 0,75:1,25 bis 1,25:0,75 beträgt, und man dieses Gemisch in eine längliche Reaktionszone einträgt und durchleitet, während diese auf einer Temperatur von 135 bis 250°C, gehalten wird, für im wesentlichen vollständigen Reaktion der Organoaluminiumverbindung mit der Carbonsäure.

4. Verfahren nach Anspruch 3, dadurch gekennzeichnet, daß man der ersten Dispersion zu sätzlich einen Ester der Formel 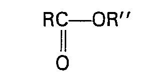 zusetzt, worin R die in Anspruch 1 angegebene Bedeutung hat und R" eine niedere Alkylgruppe ist, und in der ersten Dispersion das Molverhältnis Ester:Organoaluminiumverbindung 1,5:1 bis 0 beträgt.

5. Verfahren nach Anspruch 3, dadurch gekennzeichnet, daß man der ersten Dispersion zusätzlich eine zweite Organoaluminiumverbinding der Formel 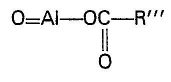 und/oder der Formel 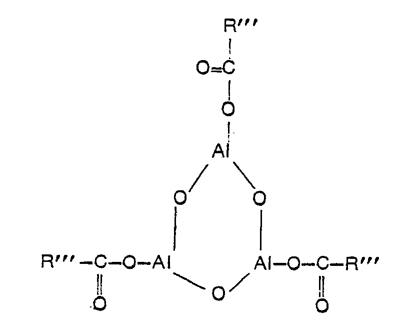 zusetzt, worin R"' R sein kann oder eine Gruppe (C) in Form eines niederen Alkyls, wobei in dieser Organoaluminiumverbindung die Gruppen (B) 40 bis 95 mol-%, die Gruppen (C) 0 bis 50 mol-% und die Gruppen (A) 5 bis 50 mol-% ausmachen.
